(19) Europäisches Patentamt
European Patent Office
Office européen des brevets

(11) **EP 3 074 920 B1**

(12) **FASCICULE DE BREVET EUROPEEN**

(45) Date de publication et mention
de la délivrance du brevet:
**31.01.2018 Bulletin 2018/05**

(51) Int Cl.:
***G06K 9/00*** *(2006.01)* ***G06T 1/20*** *(2006.01)*

(21) Numéro de dépôt: **14802897.0**

(22) Date de dépôt: **26.11.2014**

(86) Numéro de dépôt international:
**PCT/EP2014/075714**

(87) Numéro de publication internationale:
**WO 2015/078934 (04.06.2015 Gazette 2015/22)**

(54) **ANALYSE D'UNE IMAGE MULTISPECTRALE**

ANALYSE EINES MULTISPEKTRALEN BILDES

ANALYSIS OF A MULTISPECTRAL IMAGE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **28.11.2013 FR 1361739**

(43) Date de publication de la demande:
**05.10.2016 Bulletin 2016/40**

(73) Titulaire: **Safran Electronics & Defense
92100 Boulogne-Billancourt (FR)**

(72) Inventeurs:
• **BOUSQUET, Marc**
**92100 Boulogne-Billancourt (FR)**
• **THIEBAUT, Maxime**
**92100 Boulogne-Billancourt (FR)**
• **ROUX, Nicolas**
**92100 Boulogne-Billancourt (FR)**
• **FOUBERT, Philippe**
**92100 Boulogne-Billancourt (FR)**
• **TOUATI, Thierry**
**92100 Boulogne-Billancourt (FR)**

(74) Mandataire: **Cabinet Plasseraud
66, rue de la Chaussée d'Antin
75440 Paris Cedex 09 (FR)**

(56) Documents cités:
**WO-A1-2013/056198 FR-A1- 2 982 393**

• **GOUDAIL F ET AL: "SOME PRACTICAL ISSUES
IN ANOMALY DETECTION AND EXPLOITATION
OF REGIONS OF INTEREST IN HYPERSPECTRAL
IMAGES", APPLIED OPTICS, OPTICAL SOCIETY
OF AMERICA, WASHINGTON, DC; US, vol. 45, no.
21, 20 juillet 2006 (2006-07-20), pages 5223-5236,
XP001245429, ISSN: 0003-6935, DOI:
10.1364/AO.45.005223 cité dans la demande**
• **FATIH PORIKLI ET AL: "Fast Construction of
Covariance Matrices for Arbitrary Size Image
Windows", IMAGE PROCESSING, 2006 IEEE
INTERNATIONAL CONFERENCE ON, IEEE, PI, 1
octobre 2006 (2006-10-01), pages 1581-1584,
XP031048953, ISBN: 978-1-4244-0480-3**

EP 3 074 920 B1

**Description**

La présente invention concerne un procédé d'analyse d'une image multispectrale, ainsi qu'un programme d'ordinateur pour mettre en oeuvre un tel procédé. Elle concerne aussi un procédé et un dispositif de surveillance d'un environnement.

La surveillance d'un environnement est une tâche courante, notamment pour détecter des intrusions adverses. Une telle surveillance présente des difficultés particulières lorsqu'elle est effectuée dans environnement terrestre. En effet, un environnement terrestre tel qu'un paysage de campagne peut contenir un grand nombre d'éléments distincts aux contours irréguliers tels que des arbres, des buissons, des rochers, des constructions, etc, qui rendent complexes l'interprétation de l'image et la recherche d'éléments intrus. En outre, dans certaines circonstances, telles qu'une surveillance militaire, un élément intrus peut être camouflé pour que sa détection dans le paysage soit plus difficile. De façon courante, un tel camouflage est efficace contre l'observation en lumière visible, notamment pour des longueurs d'onde qui sont entre 0,45 $\mu$m (micromètre) et 0,65 $\mu$m, et tout particulièrement autour de 0,57 $\mu$m qui correspond au maximum de sensibilité de l'oeil humain.

Pour réussir à détecter l'élément intrus, qui est aussi appelé cible dans le jargon de l'Homme du métier, malgré un paysage complexe et un camouflage éventuel de la cible, il est connu d'effectuer une observation multispectrale de l'environnement, comme le divulgue le brevet FR 2982 393. Une telle observation multispectrale consiste à saisir simultanément plusieurs images du même paysage selon des bandes spectrales différentes, afin qu'une cible qui n'apparaîtrait pas distinctement dans les images saisies selon certaines bandes spectrales soit révélée par les images correspondant à d'autres bandes spectrales. Chaque bande spectrale peut être étroite, avec un intervalle de valeurs de longueur d'onde de quelques dizaines de nanomètres, ou plus large, voire très large avec une largeur de plusieurs micromètres, notamment lorsque la bande spectrale est située dans l'un des domaines infrarouges : entre 3 $\mu$m et 5 $\mu$m ou entre 8 $\mu$m et 12 $\mu$m. Il est ainsi connu qu'une observation dans l'intervalle de longueur d'onde compris entre 0,8 $\mu$m et 1,2 $\mu$m peut être efficace pour révéler une cible dans un environnement de végétation, alors que la cible est camouflée efficacement contre une détection par observation dans l'intervalle de lumière visible pour l'oeil humain.

Toutefois, une telle détection multispectrale peut encore être insuffisante pour permettre à un opérateur qui est en charge de la surveillance de détecter la présence d'une cible dans un environnement terrestre. En effet, dans certaines circonstances, aucune des images qui sont associées séparément aux bandes spectrales ne fait apparaître la cible suffisamment distinctement pour que l'opérateur de surveillance puisse détecter la cible dans ces images, compte tenu du temps d'observation alloué. Dans la suite, chaque image qui correspond séparément à l'une des bandes spectrales est appelée image spectrale. Pour de telles situations, il est encore connu d'améliorer l'efficacité de la détection de cible en présentant à l'opérateur une image qui est construite par projection de Fisher. Un tel procédé est connu notamment de l'article «Some practical issues in anomaly detection and exploitation of regions of interest in hyperspectral images», de F. Goudail et al., Applied Optics, Vol. 45, No. 21, pp. 5223-5236. D'après ce procédé, l'image qui est présentée à l'opérateur est construite en combinant en chaque point de celle-ci, appelé pixel, les valeurs d'intensités qui sont saisies séparément pour plusieurs bandes spectrales, de façon à optimiser un contraste de l'image résultante. Théoriquement, cette construction d'image consiste à projeter pour chaque pixel le vecteur des intensités qui ont été saisies pour les bandes spectrales sélectionnées, sur une direction optimale dans l'espace multidimensionnel des valeurs d'intensités spectrales. Cette direction optimale de projection peut être déterminée à partir de la matrice de covariance des intensités spectrales, estimée sur l'ensemble du champ d'image. Cela revient en fait à rechercher une corrélation maximale entre les variations d'intensités qui sont présentes dans les images différentes saisies selon les bandes spectrales sélectionnées. Le contraste de l'image qui est présentée à l'opérateur est ainsi au moins égal à celui de chaque image spectrale séparée, si bien que la détection de cible par l'opérateur est à la fois plus efficace et plus fiable. Alternativement, la direction optimale de projection peut être recherchée directement en utilisant un algorithme d'optimisation usuel, pour maximiser le contraste d'image en variant la direction de projection dans l'espace multidimensionnel des intensités spectrales.

Il est connu d'améliorer le contraste par projection de Fisher à l'intérieur d'une fenêtre spatiale qui est plus petite que l'image entière. L'opérateur de la surveillance sélectionne alors la fenêtre à l'intérieur de l'image entière, notamment sa position, en fonction de la nature de l'environnement à cet endroit dans l'image, et de sa volonté d'y accentuer la recherche d'une cible potentielle. Pour faciliter une telle sélection de la position de la fenêtre, et aussi faciliter l'identification et la nature d'une intrusion qui se produirait dans cette zone, il est encore connu de présenter à l'opérateur une image composite sur un écran. Une telle image composite peut-être constituée par l'une des images spectrales en dehors de la fenêtre, et par la portion d'image multispectrale qui résulte de la projection de Fisher à l'intérieur de la fenêtre. Alternativement, plusieurs images spectrales dont les intervalles de longueur d'onde sont contenus dans le domaine de sensibilité de l'oeil humain, peuvent être utilisées pour afficher une représentation du paysage en couleurs naturelles ou presque naturelles en dehors de la fenêtre. Mais, dans l'image composite qui est présentée à l'opérateur, le contraste renforcé qui est procuré par la projection de Fisher est restreint à l'intérieur de la fenêtre. A cause de cette restriction, l'opérateur de la surveillance ne dispose pas d'une visualisation de l'ensemble du champ d'observation avec un contraste renforcé. Il n'est alors pas capable de prendre connaissance rapidement de l'étendue d'une intrusion adverse qui est camouflée, à cause du temps qui est nécessaire pour balayer tout le champ d'observation avec des fenêtres qui sont sélectionnées et traitées successivement.

A partir de cette situation, un but général de l'invention consiste alors à fiabiliser la surveillance d'un environnement à partir d'une image multispectrale. Autrement dit, l'invention a pour but général de réduire encore la probabilité de non-détection d'un élément intrus dans une scène qui est saisie en image multispectrale.

Plus particulièrement, l'invention a pour but de fournir en temps réel à l'opérateur de surveillance, une image du champ d'observation dans laquelle le contraste est renforcé en tout point de cette image en fonction de l'information qui est contenue dans l'image multispectrale. Autrement dit, l'invention vise à fournir à l'opérateur une image du champ d'observation qui soit améliorée dans son intégralité, facilement interprétable, et qui puisse être produite avec une durée de calcul très courte. Préférentiellement, cette durée est compatible avec la réception en temps réel d'un flux vidéo provenant d'une caméra utilisée pour saisir continûment des images multispectrales successives.

Pour atteindre certains de ces buts ou d'autres, un premier aspect de l'invention propose un nouveau procédé d'analyse d'une image multispectrale, lorsque cette image multispectrale comprend plusieurs images spectrales d'une même scène mais correspondant à des intervalles spectraux différents, chaque image spectrale attribuant une valeur d'intensité à chaque pixel, ou point d'image, qui est situé à une intersection d'une ligne et d'une colonne d'une matrice de l'image multispectrale, et un point d'origine étant défini à un angle de limite périphérique de la matrice. Selon l'invention, une image de détection est construite en attribuant une valeur d'affichage à chaque pixel d'une zone utile de la matrice, cette valeur d'affichage étant obtenue à partir d'une fonction révélatrice qui quantifie un écart de contenu de l'image multispectrale entre deux zones qui sont déterminées par ce pixel. Pour cela, le procédé comprend les étapes suivantes :

/1/ calculer des images intégrales de l'un au moins des types suivants :

- pour chaque image spectrale, une image intégrale d'ordre un en attribuant à chaque pixel de calcul une valeur intégrale égale à une somme des valeurs d'intensité de cette image spectrale pour tous les pixels qui sont contenus dans un rectangle ayant deux sommets opposés situés respectivement sur le point d'origine et sur le pixel de calcul ;

- pour chaque couple d'images spectrales issu de l'image multispectrale, une image intégrale d'ordre deux en attribuant à chaque pixel de calcul une autre valeur intégrale égale à une somme, pour tous les pixels qui sont contenus dans le rectangle ayant deux sommets opposés situés respectivement sur le point d'origine et sur le pixel de calcul, de produits des deux valeurs d'intensités relatives au même pixel mais attribuées respectivement par chaque image spectrale du couple ;

/2/ définir un cadre de fenêtre fixe et un masque interne au cadre, ce masque déterminant une zone de cible et une zone de fond à l'intérieur du cadre ; et

/3/ pour chaque pixel de la zone utile de la matrice, exécuter les sous-étapes suivantes :

/3-1/ placer une fenêtre à une position dans la matrice qui est déterminée par le pixel, et la fenêtre étant limitée par le cadre défini à l'étape /2/ ;

/3-2/ en utilisant des valeurs intégrales lues dans les images intégrales calculées à l'étape /1/, déterminer une valeur de la fonction révélatrice qui quantifie l'écart de contenu de l'image multispectrale entre la zone de cible et la zone de fond à l'intérieur de la fenêtre dans la position déterminée par le pixel ; et

/3-3/ attribuer la valeur de la fonction révélatrice, calculée à la sous-étape /3-2/, au pixel pour lequel l'étape /3/ est exécutée.

Les valeurs de la fonction révélatrice sont alors utilisées pour construire l'image de détection, pixel par pixel dans la zone utile de la matrice.

Ainsi, une première caractéristique de l'invention consiste à présenter à l'opérateur de surveillance une image qui est entièrement composée à partir des valeurs de la fonction révélatrice, résultant d'un traitement local de l'image multispectrale. Cette image, dite image de détection, est homogène dans sa nature et son mode de calcul.

Une seconde caractéristique de l'invention consiste à utiliser une méthode de calcul de la fonction révélatrice, qui soit basée sur des images intégrales. Dans un premier temps, les images spectrales sont converties en images intégrales d'ordre un et/ou deux, puis la fonction révélatrice est calculée à partir de ces images intégrales. Ainsi, les sommes de valeurs d'intensités qui sont calculées sur des grands nombres de pixels, ne sont effectuées qu'une seule fois, puis les résultats de ces sommes sont lus et combinés pour obtenir la valeur de la fonction révélatrice pour chaque pixel. Grâce à cette structure du procédé d'analyse, celui-ci peut être exécuté très rapidement sans nécessiter de moyens calculatoires importants. En particulier, le procédé d'analyse de l'invention est compatible avec la réception en temps réel d'un flux vidéo provenant d'une caméra qui est utilisée pour saisir des images multispectrales continûment.

En outre, l'utilisation d'une fenêtre qui est plus petite que la matrice, pour calculer la valeur d'affichage de chaque pixel dans l'image de détection, permet que cette image de détection soit facilement interprétable visuellement par l'opérateur de la surveillance. Autrement dit, la plupart des motifs qui sont contenus dans l'image de détection peuvent être reconnus facilement par l'opérateur. De préférence, le cadre de la fenêtre peut posséder des dimensions qui sont comprises entre un cinquième et un cinquantième de celles de la matrice parallèlement aux lignes et aux colonnes.

Pour augmenter un contraste de l'image de détection, le masque peut être avantageusement défini à l'étape /2/ de sorte que la zone de cible et la zone de fond soient séparées par une zone intermédiaire à l'intérieur du cadre de fenêtre.

Selon une troisième caractéristique de l'invention, la valeur d'affichage est obtenue à partir de la valeur de la fonction révélatrice pour chaque pixel de l'image de détection, en utilisant l'une des méthodes suivantes ou une combinaison de celles-ci :

- comparer la valeur de la fonction révélatrice à un seuil, et la valeur d'affichage est prise égale à zéro si cette valeur de la fonction révélatrice est inférieure au seuil, sinon la valeur d'affichage est prise égale la valeur de la fonction révélatrice ; ou

- appliquer une conversion d'échelle linéaire à la valeur de la fonction révélatrice, et la valeur d'affichage est prise égale à un résultat de cette conversion.

Dans des mises en oeuvre simples de l'invention, l'étape /1/ peut comprendre le calcul des images intégrales d'ordre un, et la sous-étape /3-2/ peut comprendre elle-même :

/3-2-1/ déterminer deux vecteurs moyens, respectivement pour la zone de cible et pour la zone de fond, ayant chacun une coordonnée pour chaque image spectrale, qui est égale à une moyenne des valeurs d'intensité de cette image spectrale, calculée pour les pixels de la zone de cible ou de la zone de fond, respectivement ; puis

/3-2-2/ calculer la valeur de la fonction révélatrice à partir de ces deux vecteurs moyens.

En particulier, la fonction révélatrice peut être un angle entre les deux vecteurs moyens dans l'espace multidimensionnel qui a pour axes les intensités pour chaque image spectrale. Plus généralement, la fonction révélatrice peut dépendre de cet angle entre les deux vecteurs moyens.

Plus généralement, le procédé de l'invention peut n'utiliser que les images intégrales d'ordre un. Dans ce cas, les images intégrales d'ordre deux ne sont pas nécessairement calculées à l'étape /1/.

Cependant, l'étape /1/ peut comprendre le calcul des images intégrales d'ordre un et aussi d'ordre deux, si bien que la valeur de la fonction révélatrice peut être calculée à la sous-étape /3-2-2/ en utilisant des valeurs intégrales qui sont lues dans des images intégrales d'ordre deux, en plus de celles qui sont lues dans les images intégrales d'ordre un.

Eventuellement aussi, le procédé de l'invention peut n'utiliser que les images intégrales d'ordre deux. Dans un tel autre cas, les images intégrales d'ordre un ne sont pas nécessairement calculées à l'étape /1/.

Dans des mises en oeuvre particulières de l'invention, la sous-étape /3-2/ peut comprendre une détermination d'un facteur de Fisher, sous forme d'un vecteur associé à une projection de Fisher qui augmente un contraste de l'image multispectrale dans la fenêtre entre la zone de cible et la zone de fond. Dans ce cas, le facteur de Fisher peut lui-même être calculé à la sous-étape /3-2/ pour chaque pixel de la zone utile, à partir des valeurs intégrales lues dans les images intégrales d'ordre un et deux. L'exécution du procédé d'analyse de l'invention est ainsi encore plus rapide. Notamment, le facteur de Fisher peut être calculé à l'étape /3-2/ pour chaque pixel de la zone utile, sous forme d'un produit entre, d'une part, un vecteur-ligne qui résulte d'une différence entre les vecteurs moyens calculés pour la zone de cible et pour la zone de fond, et, d'autre part, une matrice de covariance inversée. La matrice de covariance considérée possède un facteur pour chaque couple d'images spectrales issu de l'image multispectrale, qui est égal à une covariance des valeurs d'intensités spectrales attribuées respectivement par chaque image spectrale du couple, calculée pour les pixels de la zone de fond.

Eventuellement, la sous-étape /3-2/ peut encore comprendre un calcul de deux valeurs moyennes de Fisher, respectivement pour la zone de cible et pour la zone de fond, qui sont chacune égale à un résultat de produit scalaire entre le facteur de Fisher et le vecteur moyen pour la zone de cible ou pour la zone de fond, respectivement. Dans ce cas, la valeur de la fonction révélatrice peut dépendre d'une différence entre les deux valeurs moyennes de Fisher.

Certaines mises en oeuvre particulières du premier aspect de l'invention peuvent être adaptées au cas où l'image multispectrale appartient à un flux vidéo qui comprend une série d'images multispectrales acquises successivement. Pour cela, certaines au moins des étapes du procédé d'analyse sont exécutées au sein d'une chaîne ordonnée de modules d'acquisition et de calcul qui sont activés simultanément et de façon synchrone. Ces modules comprennent dans l'ordre :

- un premier module, qui est adapté pour acquérir et contrôler un enregistrement ou une mémorisation de chaque image multispectrale ;

- un deuxième module, qui est adapté pour calculer les images intégrales d'ordre un et éventuellement aussi d'ordre deux pour chaque image multispectrale, et pour contrôler un enregistrement ou une mémorisation de chaque image intégrale d'ordre un ou deux ;

- un troisième module, qui est adapté pour calculer, pour chaque image multispectrale, au moins les deux vecteurs moyens respectivement pour la zone de cible et pour la zone de fond, pour chaque pixel de cette image multispectrale dans la zone utile ; et

- éventuellement un quatrième module, qui est adapté pour calculer pour chaque image multispectrale et chaque pixel de celle-ci dans la zone utile, au moins la matrice de covariance et la matrice de covariance inversée.

Dans une telle mise en oeuvre de l'invention, les modules fonctionnent simultanément pour traiter chacun une image multispectrale qui est différente de celles des autres modules. Ces images multispectrales qui sont traitées simultanément par les modules sont chronologiquement successives dans le flux vidéo dans l'ordre inverse de celui des modules dans la chaîne, puis le flux vidéo est décalé d'une image multispectrale par rapport à la chaîne des modules, de sorte que tout le flux vidéo soit progressivement analysé lors de répétitions des fonctionnements simultanés des modules, séparées par des décalages du flux vidéo par rapport à la chaîne des modules. Une telle mise en oeuvre du procédé d'analyse permet de traiter le flux vidéo des images multispectrales en temps réel.

Un second aspect de l'invention propose un support lisible par un ou plusieurs processeurs, qui comprend des codes inscrits sur ce support et adaptés pour commander au ou aux processeur(s), une exécution d'un procédé d'analyse conforme au premier aspect de l'invention. Ce second aspect de l'invention est donc un programme d'ordinateur qui possède une nature de produit commercial ou valorisable sous forme quelconque.

Un troisième aspect de l'invention propose un procédé de surveillance d'un environnement, qui comprend les étapes suivantes :

- saisir simultanément une pluralité d'images spectrales de l'environnement, de façon à obtenir une image multispectrale ;

- analyser l'image multispectrale en utilisant un procédé d'analyse conforme au premier aspect de l'invention ; et

- afficher l'image de détection sur un écran, pour un opérateur de surveillance qui observe d'écran.

Le procédé de surveillance peut comprendre en outre une comparaison de la valeur d'affichage de chaque pixel dans l'image de détection avec un seuil d'alerte. Alors, un pixel peut en outre être affiché dans cette image de détection avec une couleur qui est modifiée, avec un clignotement ou avec une incrustation si sa valeur d'affichage est supérieure au seuil d'alerte. L'attention de l'opérateur de surveillance est ainsi attirée encore plus sur cet endroit dans le champ d'observation, pour déterminer si un élément intrus y est présent.

Enfin, un quatrième aspect de l'invention propose un dispositif pour surveiller un environnement, qui comprend :

- des moyens de stockage d'une image multispectrale formée de plusieurs images spectrales d'une même scène, qui sont associées à des intervalles spectraux séparés ;

- un écran comprenant des pixels qui sont situés respectivement à des intersections de lignes et de colonnes d'une matrice ;

- un système de traitement d'image, qui est adapté pour calculer des images intégrales à partir des images spectrales, et pour stocker ces images intégrales ;

- des moyens de définition d'un cadre de fenêtre et d'un masque interne au cadre, le masque déterminant une zone de cible et une zone de fond à l'intérieur du cadre ; et

- un système de calcul qui est adapté pour mettre en oeuvre l'étape /3/ d'un procédé d'analyse conforme au premier aspect de l'invention, et pour afficher une image de détection sur l'écran, dans laquelle chaque pixel d'une zone utile de la matrice possède une valeur d'affichage qui est obtenue à partir de la valeur de la fonction révélatrice calculée pour ce pixel.

Un tel dispositif peut être adapté pour traiter un flux vidéo d'images multispectrales en appliquant à chacune de ses images multispectrales l'un des procédés d'analyse conformes à l'invention. Pour cela,

- les moyens de stockage de l'image multispectrale peuvent comprendre le premier module déjà introduit, qui est adapté pour acquérir et contrôler l'enregistrement ou la mémorisation de chaque image multispectrale ;

- le système de traitement d'image peut comprendre le deuxième module qui est adapté pour calculer les images intégrales d'ordre un et éventuellement aussi d'ordre deux ; et

- le système de calcul peut comprendre le troisième module qui est adapté pour calculer, pour chaque image multispectrale, au moins les deux vecteurs moyens respectivement pour la zone de cible et pour la zone de fond, pour chaque pixel de cette image multispectrale dans la zone utile, et peut éventuellement comprendre en outre le quatrième module qui est adapté pour calculer pour chaque pixel d'image multispectrale dans la zone utile, au moins la matrice de covariance et la matrice de covariance inversée.

Le dispositif comprend alors en outre un contrôleur qui est adapté pour commander des fonctionnements simultanés et synchrones des modules, afin d'analyser la série d'images multispectrales successives qui forme le flux vidéo. De cette façon, les modules fonctionnent simultanément pour traiter chacun une image multispectrale qui est différente de celles des autres modules, et les images multispectrales qui sont traitées simultanément par les modules sont chronologiquement successives dans le flux vidéo dans l'ordre inverse de celui des modules dans la chaîne. Le contrôleur est adapté en outre pour commander le décalage du flux vidéo d'une image multispectrale par rapport à la chaîne des modules, de sorte que tout le flux vidéo soit progressivement analysé lors de répétitions des fonctionnements simultanés des modules, séparées par des décalages du flux vidéo par rapport à la chaîne des modules.

Possiblement pour améliorer encore la vitesse de traitement du flux vidéo, le troisième module peut comprendre lui-même deux sous-modules qui sont dédiés respectivement et séparément pour calculer le vecteur moyen pour la zone de cible et le vecteur moyen pour la zone de fond, selon des fonctionnements simultanés de ces sous-modules pour chaque image multispectrale et chaque pixel de celle-ci dans la zone utile. Chaque module ou sous-module peut notamment comprendre au moins une unité de calcul dédiée, par exemple un processeur dédié.

D'autres particularités et avantages de la présente invention apparaîtront dans la description ci-après d'exemples de mises en oeuvre non limitatifs, en référence aux dessins annexés, dans lesquels :

- la figure 1 est une représentation schématique d'une image multispectrale ;

- la figure 2 représente un écran d'affichage utilisé pour mettre en oeuvre l'invention ;

- les figures 3a et 3b illustrent des principes de construction d'images intégrales utilisées pour mettre en oeuvre l'invention ;

- la figure 4 représente un masque qui peut être utilisé pour calculer un contraste à l'intérieur d'une fenêtre, dans des modes particuliers de mise en oeuvre de l'invention ;

- la figure 5 est un diagramme synoptique des étapes d'un procédé conforme à l'invention ;

- les figures 6a et 6b montrent des enchaînements de calculs effectués dans certaines étapes du procédé de la figure 5, pour deux modes différents de mise en oeuvre du procédé ;

- la figure 7 illustre un principe de calcul de vecteurs moyens qui est utilisé dans la présente invention ;

- la figure 8 illustre le principe d'une projection de Fisher dans un espace bidimensionnel d'intensités spectrales ;

- la figure 9a montre une première architecture pour un dispositif de surveillance conforme à l'invention, qui est adaptée pour analyser une série d'images multispectrales successives formant un flux vidéo, en appliquant le mode de mise en oeuvre de la figure 6b ; et

- la figure 9b montre une seconde architecture pour un dispositif de surveillance conforme à l'invention, qui est adaptée pour analyser une série d'images multispectrales successives formant un flux vidéo, en appliquant le mode de mise en oeuvre de la figure 6a.

Pour raison de clarté, les dimensions des éléments qui sont représentés dans certaines de ces figures ne correspondent ni à des dimensions réelles ni à des rapports de dimensions réels. En outre, des références identiques qui sont indiquées dans des figures différentes désignent des éléments identiques ou qui ont des fonctions identiques.

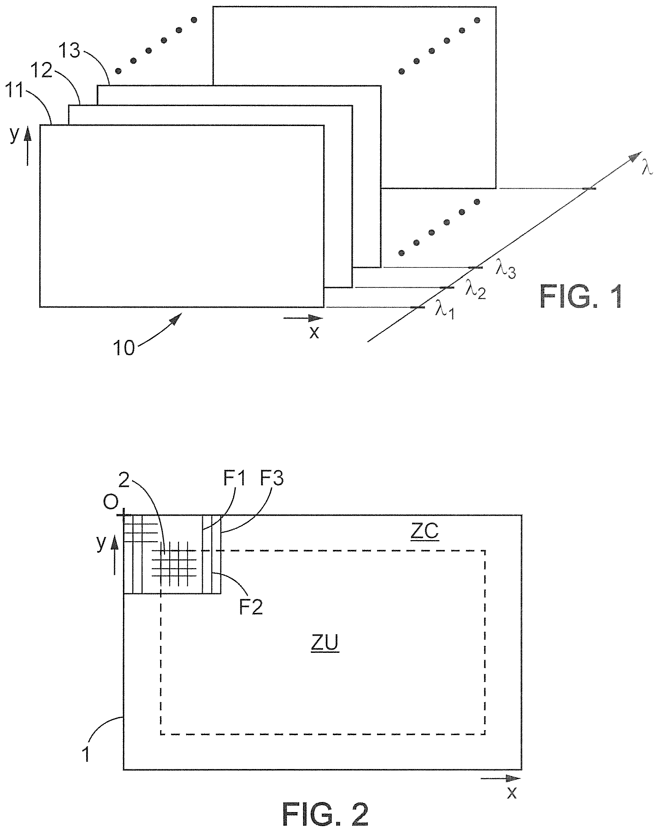

La référence 10 dans la figure 1 désigne globalement une image multispectrale formée de plusieurs images individuelles 11, 12, 13,... qui ont été saisies simultanément pour une même scène. Autrement dit, les images individuelles 11, 12, 13,... ont été saisies par des voies d'imagerie disposées en parallèle, activées en même temps et ayant le même champ optique d'entrée. Toutefois, chaque image 11, 12, 13,... a été saisie en sélectionnant une partie du rayonnement issu de la scène, qui est séparée de chaque partie du rayonnement utilisée pour une autre des images 11, 12, 13,... Cette séparation est réalisée en fonction de la longueur d'onde $\lambda$ du rayonnement, d'une des façons connues de l'Homme du métier, si bien que chacune des images 11, 12, 13,..., appelée image spectrale, a été saisie avec le rayonnement dont la longueur d'onde appartient à un intervalle distinct, de préférence sans recouvrement avec chacun des intervalles des autres images spectrales. Le nombre des images spectrales 11, 12, 13,... peut être quelconque, par exemple égal à vingt images spectrales, chacune associée à un intervalle de longueur d'onde dont la largeur peut être comprise entre quelques nanomètres et quelques dizaines de nanomètres, ou plus. Une telle image multispectrale peut aussi être dite hyperspectrale, en fonction du nombre des images spectrales qui la composent et de la largeur de chacun des intervalles de longueur d'onde de celles-ci. Par exemple, $\lambda_1$, $\lambda_2$, $\lambda_3$, ... désignent des valeurs centrales pour les intervalles de longueur d'onde respectifs des images spectrales 11, 12, 13,... En fonction de l'application de l'invention, ces intervalles peuvent être compris entre 400 nm (nanomètre) et 1 $\mu$m (micromètre), ou entre 400 nm et 2,5 $\mu$m, par exemple.

Chaque image spectrale 11, 12, 13,... peut être traitée pour l'invention à partir d'un fichier qui est lu sur un support de stockage, ou à partir d'un flux numérique qui est produit par un instrument de prise de vues à une cadence vidéo. Selon le cas, les données d'images peuvent être des données brutes produites par un ou plusieurs capteurs d'images, ou des données déjà traitées pour certaines opérations telles que le recadrage des images spectrales les unes par rapport aux autres, une correction de sur- ou sous-exposition, etc.

La figure 2 montre un écran de visualisation de l'image multispectrale 10. Il comprend une matrice 1 de points d'image 2, ou pixels 2, qui sont disposés aux intersections de lignes et de colonnes de la matrice. Par exemple, la matrice 1 peut comporter 500 colonnes et 500 lignes de pixels 2. x et y désignent respectivement la direction des lignes et celle des colonnes. Un point d'origine O est fixé à un angle de la limite périphérique de la matrice 1, par exemple en haut à gauche. Chacune des images spectrales 11, 12, 13,... attribue séparément une valeur d'intensité à chaque pixel 2 de la matrice 1. Une telle attribution est directe si chaque image spectrale est directement saisie selon la matrice 1, ou peut être indirecte dans le cas ou certaines au moins des images spectrales 11, 12, 13,... sont saisies selon une matrice différente. Dans ce cas, une valeur d'intensité pour chaque pixel 2 de la matrice 1 peut être obtenue par interpolation, pour chaque image spectrale dont la matrice initiale est différente de la matrice 1.

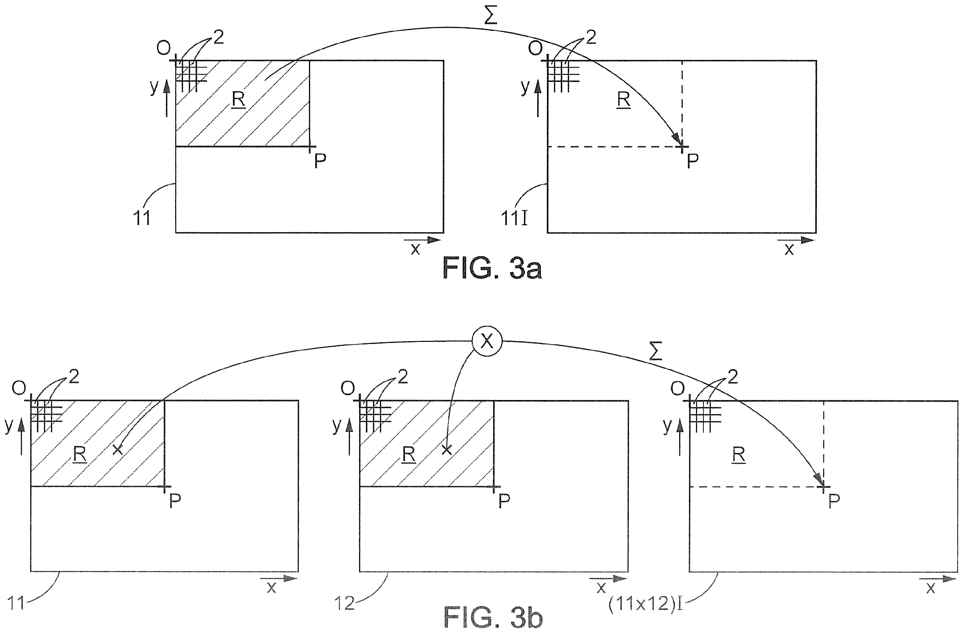

Une image intégrale est calculée séparément pour chaque image spectrale 11, 12, 13,..., selon un principe de calcul commun qui est connu de l'Homme du métier. La référence 11I sur la figure 3a désigne l'image intégrale qui est calculée à partir de l'image spectrale 11. La valeur du pixel P dans l'image intégrale 11I est calculée comme la somme (signe $\sum$ dans la figure 3a) de toutes les valeurs d'intensité dans l'image 11, pour les pixels 2 de la matrice 1 qui sont contenus dans une zone rectangulaire R dont deux angles opposés sont le point d'origine O et le pixel P lui-même. Les images intégrales ainsi calculées ont été appelées images intégrales d'ordre un dans la description générale de l'invention, et les valeurs de chacune d'elles pour les pixels 2 de la matrice 1 ont été appelées valeurs intégrales.

La figure 3b illustre le principe de calcul de l'image intégrale d'ordre deux qui est obtenue à partir des images spectrales 11 et 12. Cette image intégrale est indiquée par la référence (11x12)I. Sa valeur intégrale pour le pixel P est calculée de la façon suivante : pour chaque pixel 2 de la zone rectangulaire R dont les angles opposés sont le point d'origine O et le pixel P lui-même, le produit des deux valeurs d'intensités qui sont attribuées à ce pixel 2 par les images spectrales 11 et 12, est calculé (opérateur de produit sur la figure 3b). Puis ces produits sont ajoutés ensemble pour la zone R, et le résultat de la somme constitue la valeur intégrale de l'image intégrale (11x12)I au pixel 2. Des images intégrales d'ordre deux sont calculées de façon similaire pour tous les couples possibles des images spectrales 11, 12, 13,... , y compris les couples dont les deux images spectrales sont les mêmes. Evidemment, les couples dont les deux images sont identiques d'un couple à l'autre mais sélectionnées dans l'ordre inverse correspondent à des images intégrales d'ordre deux qui sont identiques, si bien qu'elles ne sont calculées qu'une seule fois.

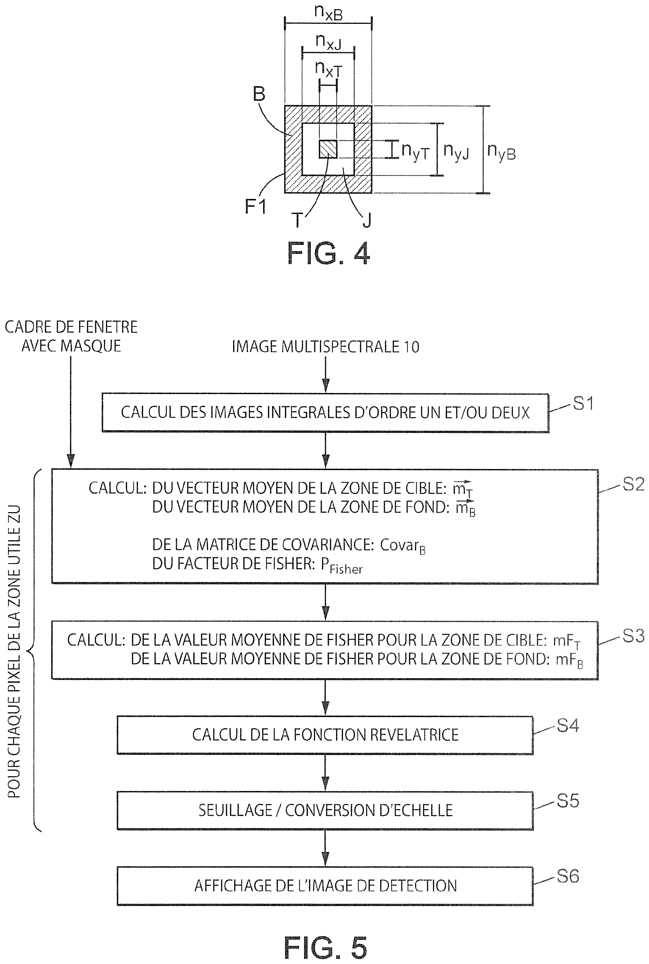

Toutes les images intégrales d'ordre un et deux sont stockées ou mémorisées (étape S1 de la figure 5), de telle sorte que les valeurs intégrales puissent être lues rapidement dans la suite de l'exécution du procédé.

Des fenêtres F1, F2, F3,... sont ensuite successivement sélectionnées à l'intérieur de la matrice 1, pour former un balayage de la matrice (figure 2). Chaque fenêtre est définie par un cadre dont les dimensions sont préférablement fixes, et une position de placement du cadre dans la matrice 1. Par exemple, la fenêtre F1 peut être placée contre l'extrémité d'angle en haut et à gauche de la matrice 1, puis la fenêtre F2 est obtenue en décalant le cadre de fenêtre d'une colonne vers la droite par rapport à la fenêtre F1, etc, jusqu'à ce que le cadre de fenêtre arrive en butée contre le bord droit de la matrice 1. Le balayage peut alors être poursuivi en revenant contre le bord gauche de la matrice 1, mais une ligne de pixels plus bas, etc. En associant chaque placement du cadre au pixel 2 de la matrice 1 qui est situé au centre de la fenêtre ainsi formée, une zone utile notée ZU est progressivement balayée par les centres de fenêtres successifs, à l'exclusion d'une zone complémentaire ZC qui résulte d'effets de bord. La zone ZU correspond à l'étendue de l'image de détection qui est construite selon l'invention.

Un masque fixe est aussi défini à l'intérieur du cadre de fenêtre, et est transposé avec ce dernier à chaque position du cadre dans la matrice 1 lorsqu'une fenêtre différente est sélectionnée. Ce masque définit une zone de cible notée T et une zone de fond notée B à l'intérieur du cadre de fenêtre. Par exemple, comme représenté dans la figure 4, la zone de cible T et la zone de fond B peuvent avoir des limites respectives carrées, être concentriques et séparées par une zone intermédiaire notée J. $n_{xB}$ et $n_{yB}$ désignent les dimensions externes de la zone de fond B selon les directions x et y. Elles correspondent aux dimensions du cadre de fenêtre, par exemple chacune égale à 51 pixels. $n_{xT}$ et $n_{yT}$ désignent les dimensions de la zone de cible T selon les directions x et y, par exemple chacune égale à 7 pixels, et $n_{xJ}$ et $n_{yJ}$ désignent les dimensions externes de la zone intermédiaire J, par exemple chacune égale à 31 pixels. Les valeurs de $n_{xB}$ et $n_{yB}$, $n_{xT}$ et $n_{yT}$, $n_{xJ}$ et $n_{yJ}$ peuvent être sélectionnées en fonction d'une hypothèse sur la taille d'un élément intrus qui est recherché dans la scène imagée, et de sa distance d'éloignement supposée.

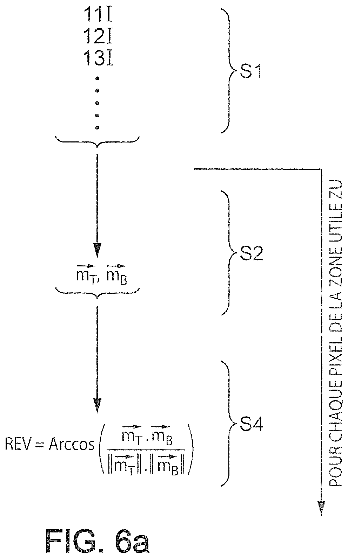

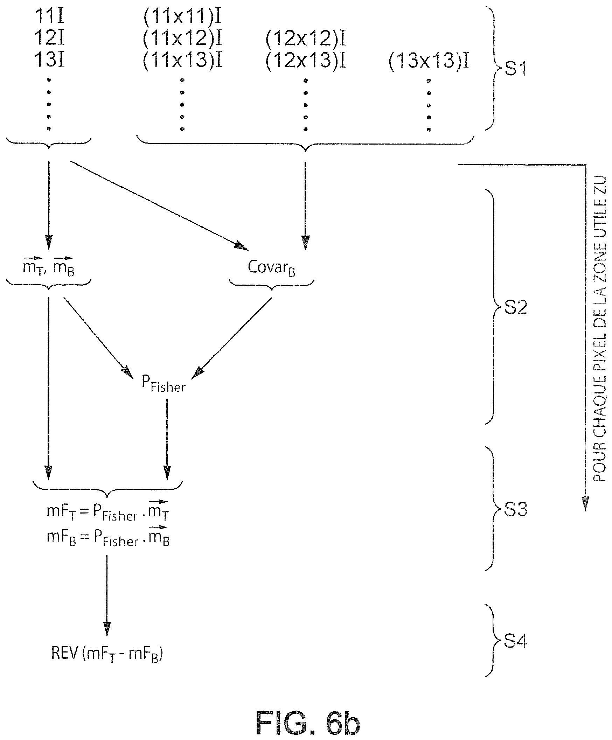

La construction de l'image de détection est maintenant décrite en référence à la figure 5 et aux figures 6a et 6b, respectivement pour deux mises en oeuvre différentes de l'invention. Pour chacune de ces mises en oeuvre séparément, la même séquence d'étapes, qui est décrite pour la fenêtre F1, est répétée pour chaque pixel 2 de la zone utile ZU.

Les valeurs d'intensités de chaque pixel 2 de la zone de cible T et de la zone de fond B, dans la fenêtre F1, sont considérées pour les d images spectrales 11, 12, 13,... qui constituent ensemble l'image multispectrale 10, d étant un nombre entier supérieur ou égal à deux. Un vecteur d'intensités spectrales est alors construit pour la zone de cible T de la façon suivante : il possède une coordonnée séparée pour chacune des images spectrales, et cette coordonnée est égale à une moyenne des valeurs d'intensité de tous les pixels de la zone de cible T dans cette image spectrale. Ainsi, le vecteur suivant peut être construit :

$$\vec{m}_T = \frac{1}{N_T} \begin{bmatrix} \sum_{i \in T} x_1(i) \\ \sum_{i \in T} x_2(i) \\ \vdots \\ \sum_{i \in T} x_d(i) \end{bmatrix}$$

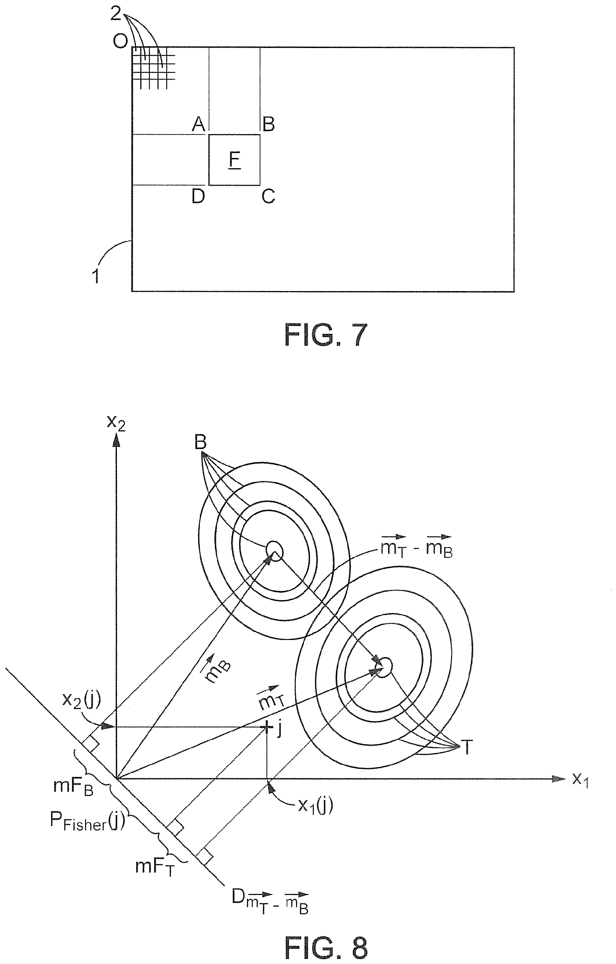

où i est un indice qui numérote les pixels de la zone de cible T, $x_1(i)$, $x_2(i)$,..., $x_d(i)$ sont les valeurs d'intensités du pixel i respectivement dans les images spectrales 11, 12, 13, ..., et $N_T$ est le nombre de pixels de la zone de cible T. Dans un espace des intensités pour les d images spectrales, le vecteur $\mathbf{m}_T$ correspond à une position moyenne des vecteurs d'intensités spectrales de tous les pixels de la zone de cible T. Autrement dit, $\mathbf{m}_T$ est le vecteur moyen des intensités spectrales pour la zone de cible T. De façon connue, chaque coordonnée du vecteur $\mathbf{m}_T$ peut être calculée directement à partir de l'image intégrale d'ordre un correspondante, de la façon suivante qui est illustrée par la figure 7 :

$$\sum_{i \in T} x_k(i) = \operatorname{Im int}_k(A) + \operatorname{Im int}_k(C) - \operatorname{Im int}_k(B) - \operatorname{Im int}_k(D)$$

où k est l'indice de la coordonnée du vecteur $\mathbf{m}_T$, inférieur ou égal à d, A, B, C et D sont les pixels des sommets de la fenêtre F, lm int$_k$(A) est la valeur intégrale au pixel A qui est lue dans l'image intégrale k d'ordre un, et etc. de la même façon pour les pixels B, C et D.

Un autre vecteur d'intensités spectrales est construit de façon analogue pour la zone de fond B :

8

$$\vec{m}_B = \frac{1}{N_B} \begin{bmatrix} \sum_{i \in B} x_1(i) \\ \sum_{i \in B} x_2(i) \\ \vdots \\ \sum_{i \in B} x_d(i) \end{bmatrix}$$

où $N_B$ est le nombre de pixels de la zone de fond B. En général, il est différent du nombre $N_T$, mais pas nécessairement. Le vecteur $\mathbf{m}_B$ correspond de la même façon à une position moyenne des vecteurs d'intensités spectrales de tous les pixels de la zone de fond B. Il est appelé vecteur moyen des intensités spectrales pour la zone de fond B. Le vecteur $\mathbf{m}_B$ peut aussi être calculé à partir des images intégrales d'ordre un, d'une façon qui est adaptée à la forme de la zone de fond B mais est accessible sans difficulté à l'Homme du métier. Les vecteurs $\mathbf{m}_T$ et $\mathbf{m}_B$ sont disposés en colonne et ont chacun d coordonnées. La figure 8 montre les vecteurs $\mathbf{m}_T$ et $\mathbf{m}_B$ dans le cas de deux images spectrales (d=2). Dans cette figure, les ellipses concentriques qui sont référencées T et B symbolisent des courbes de niveaux associées à des valeurs constantes pour des nombres de pixels dans la zone de cible T et dans la zone de fond B.

Les deux mises en oeuvre des figures 6a et 6b utilisent les vecteurs moyens $\mathbf{m}_T$ et $\mathbf{m}_B$, qui sont calculés à l'étape S2. REV désigne la fonction révélatrice qui est utilisée pour construire l'image de détection. Sa valeur pour le pixel de l'image de détection en cours de calcul, est déterminée à l'étape S4.

Pour la mise en oeuvre de la figure 6a, la fonction révélatrice REV est égale à l'angle de séparation qui existe entre les deux vecteurs moyens $\mathbf{m}_T$ et $\mathbf{m}_B$ dans l'espace des intensités spectrales. Elle peut être calculée en utilisant la formule suivante :

$$REV = Arc \cos \left( \frac{\vec{m}_T \cdot \vec{m}_B}{\left\| \vec{m}_T \right\| \cdot \left\| \vec{m}_B \right\|} \right)$$

où Arccos désigne la fonction inverse du cosinus, · au numérateur désigne le produit scalaire entre les deux vecteurs moyens $\mathbf{m}_T$ et $\mathbf{m}_B$, et les doubles barres verticales désignent la norme de chaque vecteur. La valeur de la fonction REV telle qu'elle résulte de ce mode de mise en oeuvre, peut être exprimée dans l'une quelconque des unités d'angles usuelles.

La mise en oeuvre de l'invention qui est illustrée par la figure 6b est basée sur la recherche d'un contraste maximal existant entre les contenus de l'image multispectrale 10 qui sont situés dans la zone de cible T et dans la zone de fond B.

Cette valeur maximale du contraste est celle qui résulte de l'application de la projection de Fisher au contenu multispectral de la fenêtre F1. Pour cela, la projection de Fisher est elle-même déterminée en premier lieu. Elle peut être déterminée en utilisant l'une des méthodes déjà connues. Toutefois, la méthode qui est décrite maintenant est préférée car elle exploite les images intégrales qui ont déjà été calculées.

En plus des vecteurs moyens $\mathbf{m}_T$ et $\mathbf{m}_B$, l'étape S2 comprend en outre le calcul de la matrice des covariances suivante, à partir des valeurs d'intensités des pixels 2 de la zone de fond B :

$$Co\,var_B = \begin{bmatrix} Var(x_1, x_1) & Co\,var(x_2, x_1) & \cdots & Co\,var(x_d, x_1) \\ Co\,var(x_1, x_2) & Var(x_2, x_2) & \cdots & Co\,var(x_d, x_2) \\ \vdots & \vdots & \ddots & \vdots \\ Co\,var(x_1, x_d) & Co\,var(x_2, x_d) & \cdots & Var(x_d, x_d) \end{bmatrix}$$

où $Var(x_1, x_1)$ désigne la variance des valeurs d'intensité de l'image spectrale 11 calculée sur les pixels de la zone de fond B, $Covar(x_1, x_2)$ désigne la covariance des valeurs d'intensités respectives des images spectrales 11 et 12 calculée sur les pixels de la zone de fond B, etc pour toutes les paires de valeurs d'indice sélectionnées parmi 1, 2,...d. La matrice $Covar_B$ est carrée de dimension d. Elle peut être déterminée d'une façon qui est encore connue de l'Homme du métier, à partir des images intégrales d'ordre deux et des composantes du vecteur $\mathbf{m}_B$.

La projection de Fisher $P_{Fisher}$ peut aussi être déterminée dans cette étape S2, de la façon suivante :

$$P_{Fisher} = (\vec{m}_T - \vec{m}_B)^t \cdot Co\,var_B^{-1}$$

où l'exposant t désigne la transposée d'un vecteur, l'exposant -1 désigne l'inverse d'une matrice, et · désigne l'opération de produit matriciel, ici appliquée entre le vecteur en ligne $(m_T-m_B)^t$ et la matrice $Covar_B^{-1}$. La projection de Fisher ainsi exprimée est un vecteur en ligne à d coordonnées. Usuellement, elle est destinée à être appliquée au vecteur des valeurs d'intensités de chaque pixel de la fenêtre F1 sous la forme du produit matriciel suivant :

$$P_{Fisher}(j) = P_{Fisher} \cdot \begin{bmatrix} x_1(j) \\ x_2(j) \\ \vdots \\ x_d(j) \end{bmatrix}$$

où j désigne un pixel quelconque dans la fenêtre F1, et $P_{Fisher}(j)$ est la valeur d'intensité pour le pixel j qui résulte de la projection de Fisher appliquée au vecteur des valeurs d'intensités pour ce même pixel j dans les d images spectrales. Dans le jargon de l'Homme du métier, la projection $P_{Fisher}$ qui est déterminée pour la fenêtre sélectionnée, lorsqu'elle est exprimée sous forme de vecteur en ligne pour être multipliée avec un vecteur en colonne par une opération de produit scalaire, est appelée facteur de Fisher. L'ensemble des valeurs d'intensité $P_{Fisher}(j)$ qui est obtenu pour tous les pixels j de la fenêtre est appelé matrice de Fisher. La figure 8 montre aussi cette projection de Fisher dans l'espace des intensités spectrales, pour le cas d'exemple de deux images spectrales : d=2. Les notations qui ont été introduites ci-dessus sont reprises dans cette figure. La matrice de Fisher qui est ainsi obtenue pour la fenêtre F1 est la représentation du contenu de l'image multispectrale 10 à l'intérieur de la fenêtre F1, qui possède le contraste maximal. $D_{mT-mB}$ est la direction sur laquelle sont projetés les vecteurs d'intensités spectrales des pixels j, selon le procédé de Fisher.

L'invention est basée sur l'utilisation du contraste maximal qui est présent à l'intérieur de la matrice de Fisher, mais sans qu'il soit nécessaire de calculer cette matrice elle-même. Un gain important de temps de calcul en résulte, qui est l'un des avantages de l'invention.

La moyenne des valeurs d'intensité de la matrice de Fisher à l'intérieur de la zone de cible T est, pour la fenêtre considérée :

$$mF_T = \frac{1}{N_T} \cdot \sum_{i \in T} P_{Fisher}(i)$$

De même, la moyenne des valeurs d'intensité de la matrice de Fisher à l'intérieur de la zone de fond B est, pour la même fenêtre :

$$mF_B = \frac{1}{N_B} \cdot \sum_{i \in B} P_{Fisher}(i)$$

Or les inventeurs ont découvert que les moyennes $mF_T$ et $mF_B$ pouvaient être exprimées des façons suivantes :

- la moyenne $mF_T$ est égale au facteur de Fisher appliqué au vecteur moyen des intensités spectrales pour la zone de cible T : $mF_T = P_{Fisher} \cdot m_T$, où · désigne l'opération de produit scalaire entre le vecteur-ligne de $P_{Fisher}$ et le vecteur-colonne de $m_T$ ; et
- de même, la moyenne $mF_B$ est égale au facteur de Fisher appliqué au vecteur moyen des intensités spectrales pour la zone de cible B :

$$mF_B = P_{Fisher} \cdot m_B.$$

L'étape S3 dans les figures 5 et 6b consiste à calculer les moyennes $mF_T$ et $mF_B$ de cette façon. La figure 8 montre également ces valeurs moyennes de Fisher $mF_T$ et $mF_B$ le long de la direction $D_{mT-mB}$.

Puis, à l'étape S4, la fonction révélatrice REV dépend de la différence $mF_T-mF_B$. Typiquement, REV peut être une fonction monotone, continue, croissante ou décroissante, par rapport à la différence $mF_T-mF_B$, mais ce peut être aussi une fonction monotone croissante ou décroissante par paliers.

Pour tous les modes de réalisation de l'invention, la valeur de la fonction révélatrice REV qui a été calculée pour une position de la fenêtre dans la matrice 1, est attribuée au pixel 2 de la zone utile ZU qui a déterminé cette position. Dans les modes de mise en oeuvre pris pour exemples, elle est attribuée au pixel 2 sur lequel est la fenêtre centrée.

Il est rappelé que cette valeur de la fonction révélatrice a été calculée pour chaque pixel 2 de la zone utile ZU, uniquement à partir des images intégrales d'ordre un et/ou deux. Ces images intégrales, elles-mêmes, n'ont été calculées préalablement qu'une seule fois, à l'étape S1. Une économie de calculs est obtenue de cette façon, qui est considérable et grâce à laquelle le procédé de l'invention est compatible avec une exécution en temps réel au fur et à mesure que des images multispectrales successives sont saisies, reçues dans un flux vidéo ou lues sur un support d'enregistrement.

Optionnellement, les valeurs de la fonction révélatrice REV peuvent elles-mêmes être traitées à l'étape S5, notamment dans le but de rendre l'image de détection encore plus facilement compréhensible pour l'opérateur de surveillance. Un tel traitement peut consister à comparer chaque valeur de la fonction REV à un seuil, ou plusieurs seuils, et à modifier cette valeur selon le résultat de la comparaison. Par exemple, la valeur de la fonction REV pour l'un quelconque des pixels de la zone utile ZU peut être ramenée à zéro lorsqu'elle est initialement inférieure à un premier seuil. Simultanément, la valeur la fonction REV peut être augmentée à une valeur maximale lorsqu'elle supérieure à un second seuil, afin que le pixel concerné apparaisse plus distinctement dans l'image de détection. L'attention de l'opérateur de surveillance peut ainsi être attirée plus fortement à cet endroit de l'image de détection. Le premier et/ou le second seuil peut être fixe, ou bien déterminé en fonction d'une étude statistique de l'ensemble des valeurs de la fonction REV qui ont été obtenues pour tous les pixels 2 de la zone utile ZU. Par exemple, chaque seuil peut être calculé en fonction d'une valeur moyenne de la fonction REV, calculée sur les pixels 2 de la zone utile ZU. Le traitement des valeurs de la fonction REV peut aussi comprendre une conversion d'échelle linéaire, notamment pour faire coïncider l'amplitude de variation de la fonction REV sur la zone utile ZU, avec une amplitude d'intensité d'affichage des pixels dans l'image de détection. Ainsi, la valeur nulle pour l'intensité d'affichage peut être attribuée à la valeur minimale qui a été obtenue pour la fonction REV dans la zone utile ZU, et la valeur maximale d'intensité d'affichage peut être attribuée simultanément à la valeur maximale atteinte par la fonction REV dans la zone utile ZU. Une valeur d'intensité d'affichage résulte alors d'une telle conversion linéaire, pour chaque valeur de la fonction REV intermédiaire entre les deux valeurs minimale et maximale. Possiblement, des traitements de seuillage et de conversion d'échelle peuvent être combinés.

L'image de détection est alors construite en attribuant une valeur d'affichage à chaque pixel 2 dans la zone utile ZU de la matrice 1. Cette valeur d'affichage peut être directement égale à la valeur de la fonction révélatrice REV qui a été obtenue pour ce pixel à l'étape S4, ou résulter de cette valeur de la fonction REV à la suite du traitement de l'étape S5. L'image de détection est alors affichée sur l'écran à l'étape S6, pour être observée par l'opérateur de surveillance. Eventuellement, cette image de détection peut être affichée en alternance avec une représentation du champ de surveillance qui reproduit une perception visuelle par l'oeil humain, c'est-à-dire une perception à partir de lumière qui appartient au domaine visible de longueur d'onde et qui provient du champ d'observation. Ainsi, un repérage de l'opérateur dans le champ de surveillance est facilité, pour localiser des éléments qui sont révélés par l'image de détection alors que ces éléments sont invisibles directement pour l'oeil humain.

Optionnellement, divers effets peuvent être ajoutés dans l'image de détection pour faire ressortir encore plus les endroits de celle-ci où la fonction révélatrice a produit des valeurs d'affichage qui sont supérieures à un seuil d'alerte. Ces effets peuvent être un affichage en couleur des pixels concernés et/ou un clignotement de ceux-ci et/ou l'ajout d'une incrustation. Le seuil d'alerte peut être prédéfini ou déduit d'une étude statistique des valeurs de la fonction révélatrice ou des valeurs d'affichage dans la zone utile ZU.

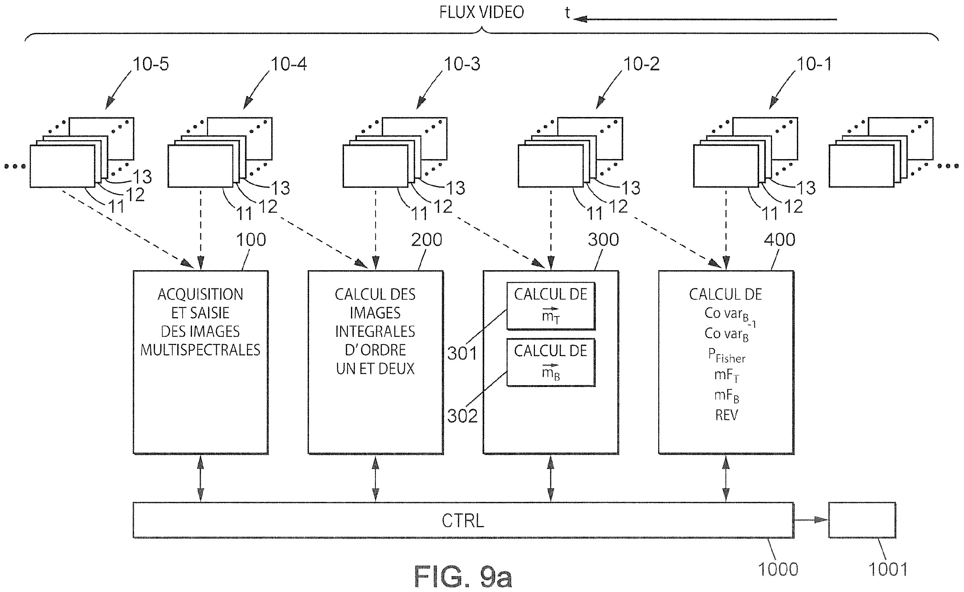

Dans la figure 9a, les références 10-1, 10-2,..., 10-5 désignent des images multispectrales qui sont saisies successivement en formant un flux vidéo. La flèche horizontale orientée vers la gauche indique le sens d'écoulement du temps t pour l'ordre chronologique des images multispectrales dans le flux vidéo. La figure 9a montre aussi une architecture de dispositif de surveillance qui est adaptée pour analyser un tel flux vidéo d'images multispectrales. Cette architecture peut comprendre au moins quatre modules qui sont référencés 100, 200, 300 et 400, et qui sont dédiés chacun notamment aux tâches suivantes :

- le module 100 pour l'acquisition, la saisie et éventuellement aussi la calibration de chaque image multispectrale 10-1, 10-2,..., 10-5 ;

- le module 200 pour le calcul des images intégrales d'ordre un 11I, 12I, 13I,... et d'ordre deux (11 x 11) I, (11 x 12)I,... pour chacune des images multispectrales 10-1, 10-2,..., 10-5 ;

- le module 300 pour le calcul des deux vecteurs moyens $\mathbf{m}_T$ et $\mathbf{m}_B$, respectivement pour la zone de cible T et la zone de fond B. Eventuellement, ces deux calculs peuvent être exécutés séparément et simultanément par deux sous-modules dédiés 301 et 302 au sein du module 300 ; et

- le module 400 pour calculer la matrice des covariances Co var$_B$ et son inverse Co var$_B^{-1}$.

Le module 400 peut aussi prendre en charge les calculs du facteur de Fisher, des valeurs de Fisher moyennes mF$_T$ et mF$_B$ respectivement pour la zone de cible T et la zone de fond B, ainsi que la valeur de la fonction révélatrice REV.

Les modules 100, 200, 300 et 400 forment une chaîne dans cet ordre. Un contrôleur 1000 coordonne les fonctionnements des modules 100-400, et transfère à un écran 1001 l'image de détection qui est construite pour chacune des images multispectrales 10-1, 10-2, 10-3,... du flux vidéo. Chaque module stocke dans des registres dédiés les résultats des calculs qu'il effectue pour chaque image multispectrale, de façon que ces résultats soient accessibles pour les modules qui sont en aval dans la chaîne. Le contrôleur 1000 synchronise les fonctionnements des quatre modules pour qu'ils opèrent un-à-un pour quatre images multispectrales qui sont successives dans le flux vidéo, comme le montrent les flèches verticales en traits interrompus. Ainsi, le module 100 acquiert par exemple l'image multispectrale 10-4 en même temps que le module 200 calcule les images intégrales 11I, 12I, 13I,... et (11 x 11)I, (11 x 12)I,... pour l'image multispectrale 10-3, et en même temps que le module 300 calcule les vecteurs moyens **m**$_T$ et **m**$_B$ pour l'image multispectrale 10-2, et aussi en même temps que le module 400 calcule la matrice des covariances Co var$_B$ et son inverse Co var$_B^{-1}$ pour l'image multispectrale 10-1. Lorsque cette session de fonctionnements est terminée, le contrôleur 1000 commande un changement d'image multispectrale pour chacun des modules, correspondant à un décalage du flux vidéo d'une image multispectrale vers la droite de la figure 9a (flèches obliques en traits interrompus). Lors d'une nouvelle session de fonctionnements pour les quatre modules, le module 100 acquiert alors l'image multispectrale 10-5 en même temps que le module 200 calcule les images intégrales 11I, 12I, 13I,... et (11 x 11)I, (11 x 12)I,... pour l'image multispectrale 10-4, et en même temps que le module 300 calcule les vecteurs moyens **m**$_T$ et **m**$_B$ pour l'image multispectrale 10-3, et même temps que le module 400 calcule la matrice des covariances Co var$_B$ et son inverse Co var$_B^{-1}$ pour l'image multispectrale 10-2. De cette façon, toutes les images multispectrales du flux vidéo sont progressivement analysées, et les images de détection qui en résultent sont affichées successivement sur l'écran 1001.

Eventuellement, les calculs du facteur de Fisher, des valeurs de Fisher moyennes mF$_T$ et mF$_B$ respectivement pour la zone de cible T et la zone de fond B, ainsi que de la valeur de la fonction révélatrice REV, peuvent être effectués par un cinquième module distinct du module 400, ou par le contrôleur 1000. De même, les opérations de seuillage et de conversion d'échelle qui peuvent être appliquées aux valeurs de la fonction révélatrice REV pour obtenir chaque image de détection, peuvent être exécutées alternativement par le module 400, le cinquième module éventuel ou le contrôleur 1000.

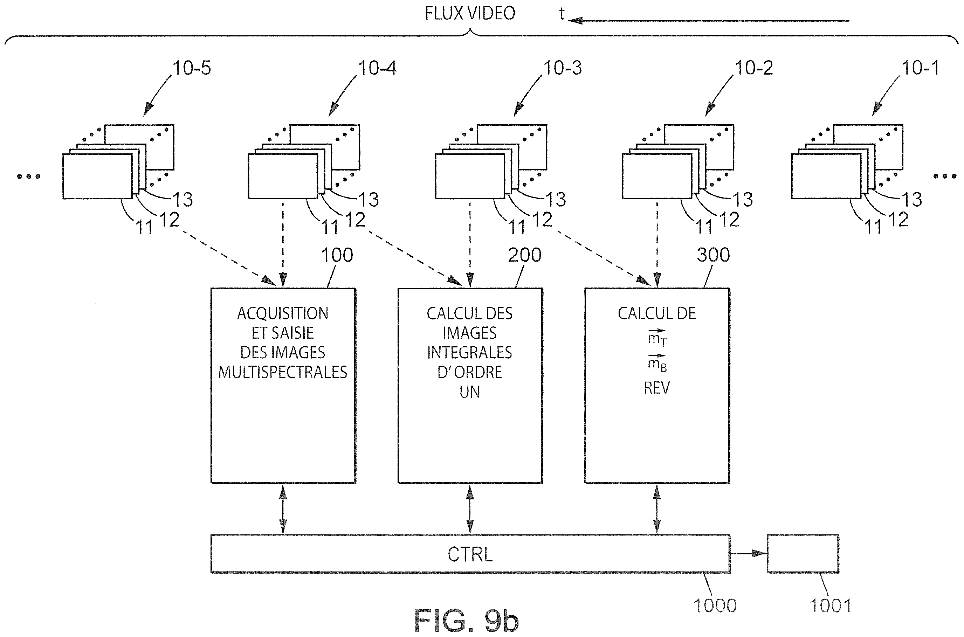

La figure 9b correspond à la figure 9a, en remplaçant le mode de mise en oeuvre de la figure 6b par celui de la figure 6a. Dans ce cas, trois modules peuvent être suffisants dans la chaîne pour traiter le flux vidéo en temps réel, au lieu de quatre, du fait de la quantité de calculs qui est plus faible pour parvenir aux valeurs de la fonction révélatrice. La compréhension de la figure 9b se déduit des explications qui ont été fournies pour la figure 9a, si bien qu'il n'est pas nécessaire de commenter davantage la figure 9b.

Il est entendu que l'invention peut être reproduite en changeant des aspects secondaires des modes de mise en oeuvre qui ont été décrits en détail ci-dessus, tout en conservant les principaux avantages qui ont été cités et qui sont encore rappelés :

- une image de détection qui est cohérente et dont le mode de construction est homogène, est présentée à l'opérateur de surveillance pour révéler des éléments camouflés présents dans le champ d'observation ;

- ces éléments décamouflés peuvent être reconnus par l'opérateur d'après l'image de détection ;

- l'image de détection peut être calculée et présentée à l'opérateur en temps réel pendant la mission de surveillance ; et

- l'invention permet de traiter en temps réel un flux vidéo d'images multispectrales.

Enfin, la zone de cible et la zone de fond qui sont déterminées par le masque dans le cadre de fenêtre peuvent avoir des formes variables, tant que ces formes sont composées chacune d'un ou plusieurs rectangles ou carrés. En particulier, il n'est pas indispensable que la zone de fond soit continue autour de la zone de cible.

## Revendications

1. Procédé d'analyse d'une image multispectrale (10), ladite image multispectrale comprenant plusieurs images spectrales (11, 12, 13,...) d'une même scène mais correspondant à des intervalles spectraux différents,

chaque image spectrale attribuant une valeur d'intensité à chaque pixel (2) qui est situé à une intersection d'une ligne et d'une colonne d'une matrice (1) de l'image multispectrale, et un point d'origine (O) étant défini à un angle de limite périphérique de la matrice ;

procédé suivant lequel une image de détection est construite en attribuant une valeur d'affichage à chaque pixel d'une zone utile (ZU) de la matrice, ladite valeur d'affichage étant obtenue à partir d'une fonction révélatrice qui quantifie un écart de contenu de l'image multispectrale entre deux zones déterminées par ledit pixel ;

le procédé comprenant les étapes suivantes :

/1/ calculer des images intégrales de l'un au moins des types suivants :

- pour chaque image spectrale, une image intégrale d'ordre un en attribuant à chaque pixel de calcul une valeur intégrale égale à une somme des valeurs d'intensité de ladite image spectrale pour tous les pixels contenus dans un rectangle ayant deux sommets opposés situés respectivement sur le point d'origine et sur ledit pixel de calcul ;
- pour chaque couple d'images spectrales issu de l'image multispectrale, une image intégrale d'ordre deux en attribuant à chaque pixel de calcul une autre valeur intégrale égale à une somme, pour tous les pixels contenus dans le rectangle ayant deux sommets opposés situés respectivement sur le point d'origine et sur ledit pixel de calcul, de produits des deux valeurs d'intensités relatives au même pixel mais attribuées respectivement par chaque image spectrale du couple ;

/2/ définir un cadre de fenêtre fixe et un masque fixe interne au cadre, ledit masque définissant une zone de cible et une zone de fond à l'intérieur dudit cadre ; et

/3/ pour chaque pixel (2) de la zone utile (ZU) de la matrice (1), exécuter les sous-étapes suivantes :

/3-1/ placer une fenêtre à une position dans la matrice qui est déterminée par le pixel, ladite fenêtre étant limitée par le cadre défini à l'étape /2/ ;

/3-2/ en utilisant des valeurs intégrales lues dans les images intégrales calculées à l'étape /1/, déterminer une valeur de la fonction révélatrice qui quantifie l'écart de contenu de l'image multispectrale entre la zone de cible et la zone de fond à l'intérieur de la fenêtre dans la position déterminée par ledit pixel ; et

/3-3/ attribuer la valeur de la fonction révélatrice, calculée à la sous-étape /3-2/, au pixel pour lequel l'étape /3/ est exécutée ; procédé d'analyse suivant lequel la valeur d'affichage est obtenue à partir de la valeur de la fonction révélatrice pour chaque pixel de l'image de détection, en utilisant l'une des méthodes suivantes ou une combinaison des dites méthodes :

- comparer la valeur de la fonction révélatrice à un seuil, et la valeur d'affichage est prise égale à zéro si ladite valeur de la fonction révélatrice est inférieure au seuil, sinon ladite valeur d'affichage est prise égale à ladite la valeur de la fonction révélatrice ; ou
- appliquer une conversion d'échelle linéaire à la valeur de la fonction révélatrice, et la valeur d'affichage est prise égale à un résultat de la conversion.

2. Procédé d'analyse selon la revendication 1, suivant lequel le cadre de fenêtre possède des dimensions comprises entre un cinquième un cinquantième de dimensions de la matrice parallèlement aux lignes et aux colonnes.

3. Procédé d'analyse selon la revendication 1 ou 2, suivant lequel le masque est défini à l'étape /2/ de sorte que la zone de cible et la zone de fond sont séparées par une zone intermédiaire à l'intérieur du cadre de fenêtre.

4. Procédé d'analyse selon l'une quelconque des revendications précédentes, suivant lequel l'étape /1/ comprend le calcul des images intégrales d'ordre un, et la sous-étape /3-2/ comprend elle-même :

/3-2-1/ en utilisant des valeurs intégrales lues dans les images intégrales d'ordre un, déterminer deux vecteurs moyens, respectivement pour la zone de cible et pour la zone de fond, ayant chacun une coordonnée pour chaque image spectrale, qui est égale à une moyenne des valeurs d'intensité de ladite image spectrale, calculée pour les pixels de la zone de cible ou de la zone de fond, respectivement ; puis

/3-2-2/ calculer la valeur de la fonction révélatrice à partir des dits deux vecteurs moyens.

5. Procédé d'analyse selon la revendication 4, suivant lequel la fonction révélatrice est un angle entre les deux vecteurs moyens dans un espace multidimensionnel ayant pour axes les intensités pour chaque image spectrale, ou dépend dudit angle.

**6.** Procédé d'analyse selon l'une quelconque des revendications précédentes, suivant lequel l'étape /1/ comprend le calcul des images intégrales d'ordre un et deux, et à la sous-étape /3-2-2/, la valeur de la fonction révélatrice est calculée en utilisant des valeurs intégrales lues dans les images intégrales d'ordre deux, en plus de valeurs intégrales lues dans les images intégrales d'ordre un.

**7.** Procédé d'analyse selon l'une quelconque des revendications précédentes, suivant lequel la sous-étape /3-2/ comprend une détermination d'un facteur de Fisher, sous forme d'un vecteur associé à une projection de Fisher qui augmente un contraste de l'image multispectrale dans la fenêtre entre la zone de cible et la zone de fond.

**8.** Procédé d'analyse selon les revendications 6 et 7, suivant lequel le facteur de Fisher est lui-même calculé à la sous-étape /3-2/ pour chaque pixel de la zone utile, à partir des valeurs intégrales lues dans les images intégrales d'ordre un et deux.

**9.** Procédé d'analyse selon les revendications 4 et 8, suivant lequel le facteur de Fisher est calculé à l'étape /3-2/ pour chaque pixel de la zone utile, sous forme d'un produit entre, d'une part, un vecteur-ligne résultant d'une différence entre les vecteurs moyens calculés pour la zone de cible et pour la zone de fond, et, d'autre part, une matrice de covariance inversée, ladite matrice de covariance ayant un facteur pour chaque couple d'images spectrales issu de l'image multispectrale, qui est égal à une covariance des valeurs d'intensités spectrales attribuées respectivement par chaque image spectrale du couple, calculée pour les pixels de la zone de fond.

**10.** Procédé d'analyse selon la revendication 4 et l'une quelconque des revendications 7 à 9, dans lequel la sous-étape /3-2/ comprend un calcul de deux valeurs moyennes de Fisher, respectivement pour la zone de cible et pour la zone de fond, chacune égale à un résultat de produit scalaire entre le facteur de Fisher et le vecteur moyen pour la zone de cible ou pour la zone de fond, respectivement ;
et la valeur de la fonction révélatrice dépend d'une différence entre les dites deux valeurs moyennes de Fisher.

**11.** Procédé d'analyse selon la revendication 4 ou 5, suivant lequel l'image multispectrale appartient à un flux vidéo comprenant une série d'images multispectrales (10-1, 10-2, 10-3...) acquises successivement ;
suivant lequel certaines au moins des étapes du procédé sont exécutées au sein d'une chaîne ordonnée de modules d'acquisition et de calcul activés simultanément et de façon synchrone, lesdits modules comprenant dans l'ordre :

- un premier module (100) adapté pour acquérir et contrôler un enregistrement ou une mémorisation de chaque image multispectrale ;
- un deuxième module (200) adapté pour calculer les images intégrales d'ordre un, et contrôler un enregistrement ou une mémorisation de chaque image intégrale d'ordre un ; et
- un troisième module (300) adapté pour calculer, pour chaque image multispectrale, au moins les deux vecteurs moyens respectivement pour la zone de cible et pour la zone de fond, pour chaque pixel (2) de ladite image multispectrale dans la zone utile (ZU) ; et

et suivant lequel les modules fonctionnent simultanément pour traiter chacun une image multispectrale qui est différente de celles des autres modules, lesdites images multispectrales traitées simultanément par les modules étant chronologiquement successives dans le flux vidéo dans l'ordre inverse de celui des modules dans la chaîne, puis le flux vidéo est décalé d'une image multispectrale par rapport à la chaîne des modules, de sorte que tout le flux vidéo soit progressivement analysé lors de répétitions des fonctionnements simultanés des modules, séparées par des décalages du flux vidéo par rapport à la chaîne des modules.

**12.** Procédé d'analyse selon les revendications 9 et 10, suivant lequel l'image multispectrale appartient à un flux vidéo comprenant une série d'images multispectrales (10-1, 10-2, 10-3...) acquises successivement ;
suivant lequel certaines au moins des étapes du procédé sont exécutées au sein d'une chaîne ordonnée de modules d'acquisition et de calcul activés simultanément et de façon synchrone, lesdits modules comprenant dans l'ordre :

- un premier module (100) adapté pour acquérir et contrôler un enregistrement ou une mémorisation de chaque image multispectrale ;
- un deuxième module (200) adapté pour calculer les images intégrales d'ordre un et d'ordre deux pour chaque image multispectrale, et contrôler un enregistrement ou une mémorisation de chaque image intégrale d'ordre un ou deux ;
- un troisième module (300) adapté pour calculer, pour chaque image multispectrale, les deux vecteurs moyens respectivement pour la zone de cible et pour la zone de fond, pour chaque pixel (2) de ladite image multispectrale dans la zone utile (ZU) ; et

- un quatrième module (400) adapté pour calculer pour chaque image multispectrale et chaque pixel (2) de ladite image multispectrale dans la zone utile (ZU), au moins la matrice de covariance et la matrice de covariance inversée,

et suivant lequel les modules fonctionnent simultanément pour traiter chacun une image multispectrale qui est différente de celles des autres modules, lesdites images multispectrales traitées simultanément par les modules étant chronologiquement successives dans le flux vidéo dans l'ordre inverse de celui des modules dans la chaîne, puis le flux vidéo est décalé d'une image multispectrale par rapport à la chaîne des modules, de sorte que tout le flux vidéo soit progressivement analysé lors de répétitions des fonctionnements simultanés des modules, séparées par des décalages du flux vidéo par rapport à la chaîne des modules.

**13.** Produit programme d'ordinateur, comprenant un support lisible par un ou plusieurs processeurs, et des codes inscrits sur ledit support et adaptés pour commander audit un ou plusieurs processeurs, une exécution d'un procédé d'analyse conforme à l'une quelconque des revendications 1 à 12.

**14.** Procédé de surveillance d'un environnement, comprenant les étapes suivantes :

- saisir simultanément une pluralité d'images spectrales de l'environnement, de façon à obtenir une image multispectrale ;
- analyser l'image multispectrale en utilisant un procédé d'analyse conforme à l'une quelconque des revendications 1 à 12 ; et
- afficher l'image de détection sur un écran, pour un opérateur de surveillance qui observe d'écran.

**15.** Procédé de surveillance selon la revendication 14, comprenant en outre une comparaison de la valeur d'affichage de chaque pixel dans l'image de détection avec un seuil d'alerte, et suivant lequel un pixel est en outre affiché dans l'image de détection avec une couleur modifiée, un clignotement ou une incrustation si la valeur d'affichage dudit pixel est supérieure au seuil d'alerte.

**16.** Dispositif pour surveiller un environnement, comprenant :

- des moyens de stockage d'une image multispectrale (10) formée de plusieurs images spectrales (11, 12, 13,...) d'une même scène, qui sont associées à des intervalles spectraux séparés ;
- un écran (1001) comprenant des pixels (2) situés respectivement à des intersections de lignes et de colonnes d'une matrice (1) ;
- un système de traitement d'image, adapté pour calculer des images intégrales à partir des images spectrales (11, 12, 13,...), et pour stocker les dites images intégrale
- des moyens de définition d'un cadre de fenêtre et d'un masque interne au cadre, ledit masque déterminant une zone de cible et une zone de fond à l'intérieur dudit cadre ; et
- un système de calcul adapté pour mettre en oeuvre l'étape /3/ d'un procédé d'analyse qui est conforme à l'une quelconque des revendications 1 à 12, et pour afficher une image de détection sur l'écran, dans laquelle chaque pixel (2) d'une zone utile (ZU) de la matrice (1) possède une valeur d'affichage qui est obtenue à partir de la valeur de la fonction révélatrice calculée pour ledit pixel.

**17.** Dispositif selon la revendication 16, adapté pour exécuter un procédé d'analyse conforme à la revendication 4 ou 5, et dans lequel :

- les moyens de stockage de l'image multispectrale comprennent un premier module (100) adapté pour acquérir et contrôler un enregistrement ou une mémorisation de l'image multispectrale ;
- le système de traitement d'image comprend un deuxième module (200) adapté pour calculer les images intégrales d'ordre un pour chaque image multispectrale ; et
- le système de calcul comprend un troisième module (300) adapté pour calculer, pour chaque image multispectrale, au moins les deux vecteurs moyens respectivement pour la zone de cible et pour la zone de fond, pour chaque pixel (2) de ladite image multispectrale dans la zone utile (ZU),

les premier (100), deuxième (200) et troisième (300) modules étant agencés dans l'ordre en une chaîne ordonnée de modules, et le dispositif comprenant en outre :

**EP 3 074 920 B1**

- un contrôleur (1000) adapté pour commander des fonctionnements simultanés et synchrones des modules afin d'analyser une série d'images multispectrales (10-1, 10-2, 10-3...) successives formant un flux vidéo, de sorte que lesdits modules fonctionnent simultanément pour traiter chacun une image multispectrale qui est différente de celles des autres modules, lesdites images multispectrales traitées simultanément par les modules étant chronologiquement successives dans le flux vidéo dans l'ordre inverse de celui des modules dans la chaîne, et ledit contrôleur étant adapté en outre pour commander un décalage du flux vidéo d'une image multispectrale par rapport à la chaîne des modules, de sorte que tout le flux vidéo soit progressivement analysé lors de répétitions des fonctionnements simultanés des modules, séparées par des décalages du flux vidéo par rapport à la chaîne des modules.

**18.** Dispositif selon la revendication 16, adapté pour exécuter un procédé d'analyse conforme aux revendications 9 et 10, et dans lequel :

- les moyens de stockage de l'image multispectrale comprennent un premier module (100) adapté pour acquérir et contrôler un enregistrement ou une mémorisation de l'image multispectrale ;
- le système de traitement d'image comprend un deuxième module (200) adapté pour calculer les images intégrales d'ordre un et d'ordre deux pour chaque image multispectrale ; et
- le système de calcul comprend un troisième module (300) adapté pour calculer, pour chaque image multispectrale, les deux vecteurs moyens respectivement pour la zone de cible et pour la zone de fond, pour chaque pixel (2) de ladite image multispectrale dans la zone utile (ZU), et comprend en outre un quatrième module (400) adapté pour calculer pour chaque pixel (2) de chaque image multispectrale dans la zone utile (ZU), au moins la matrice de covariance et la matrice de covariance inversée,

les premier (100), deuxième (200), troisième (300) et quatrième (400) modules étant agencés dans l'ordre en une chaîne ordonnée de modules, et le dispositif comprenant en outre :

- un contrôleur (1000) adapté pour commander des fonctionnements simultanés et synchrones des modules afin d'analyser une série d'images multispectrales (10-1, 10-2, 10-3...) successives formant un flux vidéo, de sorte que lesdits modules fonctionnent simultanément pour traiter chacun une image multispectrale qui est différente de celles des autres modules, lesdites images multispectrales traitées simultanément par les modules étant chronologiquement successives dans le flux vidéo dans l'ordre inverse de celui des modules dans la chaîne, et ledit contrôleur étant adapté en outre pour commander un décalage du flux vidéo d'une image multispectrale par rapport à la chaîne des modules, de sorte que tout le flux vidéo soit progressivement analysé lors de répétitions des fonctionnements simultanés des modules, séparées par des décalages du flux vidéo par rapport à la chaîne des modules.

**19.** Dispositif selon la revendication 17 ou 18, dans lequel le troisième module (300) comprend lui-même deux sous-modules (301, 302) qui sont dédiés respectivement et séparément pour calculer le vecteur moyen pour la zone de cible et le vecteur moyen pour la zone de fond, selon des fonctionnements simultanés desdits sous-modules pour chaque image multispectrale et chaque pixel (2) de ladite image multispectrale dans la zone utile (ZU).

**20.** Dispositif selon l'une quelconque des revendications 17 à 19, dans lequel chaque module ou sous-module comprend au moins une unité de calcul dédiée.

**Patentansprüche**

**1.** Verfahren zur Analyse eines Multispektralbildes (10), wobei das Multispektralbild mehrere Spektralbilder (11, 12, 13, ...) einer selben Szene, allerdings unterschiedlichen Spektralintervallen entsprechend, umfasst, wobei jedes Spektralbild jedem Pixel (2), das sich an einer Schnittstelle einer Linie und einer Spalte einer Matrix (1) des Multispektralbildes befindet, einen Intensitätswert zuordnet, und wobei ein Ursprungspunkt (O) an einem peripheren Grenzwinkel der Matrix definiert wird; wobei bei dem Verfahren ein Erfassungsbild konstruiert wird, idem ein Anzeigewert jedem Pixel einer Nutzzone (ZU) der Matrix zugeordnet wird, wobei der Anzeigewert aus einer Aufdeckungsfunktion erhalten wird, die eine Inhaltsabweichung des Multispektralbildes zwischen zwei durch das Pixel bestimmten Zonen quantifiziert; wobei das Verfahren die folgenden Schritte umfasst:

/1/ Berechnen der Integralbilder mindestens eines der folgenden Typen:

- für jedes Spektralbild ein Integralbild erster Ordnung, indem jedem Berechnungspixel ein Integralwert gleich einer Summe der Intensitätswerte des Spektralbildes für alle Pixel zugeordnet wird, die in einem Rechteck enthalten sind, das zwei gegenüberliegende Scheitel umfasst, die sich am Ursprungspunkt bzw. am Berechnungspixel befinden;

- für jedes Paar von Spektralbildern, das aus dem Multispektralbild hervorgeht, ein Integralbild zweiter Ordnung, indem jedem Berechnungspixel ein weiterer Integralwert gleich einer Summe von Produkten der zwei Intensitätswerte, die sich auf denselben Pixel beziehen, allerdings jeweils von jedem Spektralbild des Paars zugeordnet sind, für alle Pixel zugeordnet wird, die in dem Rechteck enthalten sind, das zwei gegenüberliegende Scheitel umfasst, die sich am Ursprungspunkt bzw. am Berechnungspixel befinden;

/2/ Definieren eines festen Fensterrahmens und einer festen Maske innerhalb des Rahmens, wobei die Maske eine Zielzone und eine Bodenzone innerhalb des Rahmens definiert; und

/3/ für jedes Pixel (2) der Nutzzone (ZU) der Matrix (1) Durchführen der folgenden Unterschritte:

/3-1/ Anordnen eines Fensters an einer Position in der Matrix, die durch das Pixel bestimmt wird, wobei das Fenster durch den in Schritt /2/ definierten Rahmen begrenzt ist;

/3-2/ unter Verwendung der in den in Schritt /1/ berechneten Integralbildern abgelesenen Integralwerte Bestimmen eines Werts der Aufdeckungsfunktion, der die Inhaltsabweichung des Multispektralbildes zwischen der Zielzone und der Bodenzone im Inneren des Fensters in der durch das Pixel bestimmten Position quantifiziert; und

/3-3/ Zuordnen des Werts der Aufdeckungsfunktion, der in dem Unterschritt /3-2/ berechnet wurde, dem Pixel, für das der Schritt /3/ ausgeführt wird;

wobei bei dem Analyseverfahren der Anzeigewert aus dem Wert der Aufdeckungsfunktion für jedes Pixel des Erfassungsbildes unter Verwendung einer der folgenden Methoden oder einer Kombination der Methoden erhalten wird:

- Vergleichen des Werts der Aufdeckungsfunktion mit einer Schwelle, wobei der Anzeigewert gleich Null gewählt wird, wenn der Wert der Aufdeckungsfunktion kleiner als die Schwelle ist, und andernfalls der Anzeigewert gleich dem Wert der Aufdeckungsfunktion gewählt wird; oder

- Anwenden einer linearen Umwandlung auf den Wert der Aufdeckungsfunktion, wobei der Anzeigewert gleich einem Resultat der Umwandlung gewählt wird.

2. Analyseverfahren nach Anspruch 1, bei dem der Fensterrahmen Dimensionen zwischen einem Fünftel und einem Fünfzigstel von Dimensionen der Matrix parallel zu den Linien und Spalten besitzt.

3. Analyseverfahren nach Anspruch 1 oder 2, bei dem die Maske in Schritt /2/ definiert wird, so dass die Zielzone und die Bodenzone durch eine Zwischenzone innerhalb des Fensterrahmens getrennt sind.

4. Analyseverfahren nach einem der vorhergehenden Ansprüche, bei dem der Schritt /1/ die Berechnung der Integralbilder erster Ordnung umfasst, und der Unterschritt /3-2/ selbst umfasst:

/3-2-1/ unter Verwendung der in den Integralbildern erster Ordnung abgelesenen Integralwerte Bestimmen zweier Durchschnittsvektoren für die Zielzone bzw. die Bodenzone, die jeweils eine Koordinate für jedes Spektralbild haben, die gleich einem Durchschnitt der Intensitätswerte des Spektralbildes ist, berechnet für die Pixel der Zielzone bzw. der Bodenzone; und dann

/3-2-2/ Berechnen des Werts der Aufdeckungsfunktion aus den zwei Durchschnittsvektoren.

5. Analyseverfahren nach Anspruch 4, bei dem die Aufdeckungsfunktion ein Winkel zwischen den zwei Durchschnittsvektoren in einem mehrdimensionalen Raum ist, der als Achsen die Intensitäten für jedes Spektralbild hat, oder von dem Winkel abhängt.

6. Analyseverfahren nach einem der vorhergehenden Ansprüche, bei dem der Schritt /1/ die Berechnung der Integralbilder erster und zweiter Ordnung umfasst, und in dem Unterschritt /3-2-2/ der Wert der Aufdeckungsfunktion berechnet wird, wobei Integralwerte, die in den Integralbildern zweiter Ordnung abgelesen werden, zusätzlich zu den Integralwerten, die in den Integralbildern erster Ordnung abgelesen werden, verwendet werden.

7. Analyseverfahren nach einem der vorhergehenden Ansprüche, bei dem der Unterschritt /3-2/ eine Bestimmung eines Fisher-Faktors in Form eines Vektors umfasst, der einer Fisher-Projektion zugeordnet ist, die einen Kontrast des Multispektralbildes in dem Fenster zwischen der Zielzone und der Bodenzone erhöht.

8. Analyseverfahren nach den Ansprüchen 6 und 7, bei dem der Fisher-Faktor selbst in dem Unterschritt /3-2/ für jedes Pixel der Nutzzone aus den in den Integralbildern erster und zweiter Ordnung abgelesenen Integralwerten berechnet wird.

9. Analyseverfahren nach den Ansprüchen 4 und 8, bei dem der Fisher-Faktor in dem Schritt /3-2/ für jedes Pixel der Nutzzone berechnet wird, in Form eines Produkts zwischen einerseits einem Zeilenvektor, der sich aus einer Differenz zwischen den für die Zielzone und für die Bodenzone berechneten Durchschnittswerten ergibt, und andererseits einer umgekehrten Kovarianzmatrix, wobei die Kovarianzmatrix einen Faktor für jedes Paar von aus dem Multispektralbild hervorgehenden Spektralbildern hat, der gleich einer Kovarianz der Spektralintensitätswerte ist, die von jedem Spektralbild des Paars, berechnet für die Pixel der Bodenzone, zugeordnet werden.

10. Analyseverfahren nach Anspruch 4 und einem der Ansprüche 7 bis 9, bei dem der Unterschritt /3-2/ eine Berechnung von zwei Fisher-Durchschnittswerten für die Zielzone bzw. für die Bodenzone umfasst, die jeweils gleich einem Resultat eines skalaren Produkts zwischen dem Fisher-Faktor und dem Durchschnittsvektor für die Zielzone bzw. für die Bodenzone sind;
und der Wert der Aufdeckungsfunktion von einer Differenz zwischen den zwei Fisher-Durchschnittswerten abhängt.

11. Analyseverfahren nach Anspruch 4 oder 5, bei dem das Multispektralbild einem Videostrom angehört, umfassend eine Reihe von Multispektralbildern (10-1, 10-2, 10-3, ...), die nacheinander erfasst werden;
bei dem mindestens gewisse der Schritte des Verfahrens innerhalb einer geordneten Kette von Erfassungs- und Berechnungsmodulen ausgeführt werden, die gleichzeitig und synchron aktiviert werden, wobei die Module in dieser Reihenfolge umfassen:

- ein erstes Modul (100), das dazu vorgesehen ist, eine Aufzeichnung oder eine Speicherung jedes Multispektralbildes zu erfassen und zu kontrollieren;
- ein zweites Modul (200), das dazu vorgesehen ist, die Integralbilder erster Ordnung zu berechnen und eine Aufzeichnung oder eine Speicherung jedes Integralbildes erster Ordnung zu kontrollieren; und
- ein drittes Modul (300), das dazu vorgesehen ist, für jedes Multispektralbild mindestens die zwei Durchschnittsvektoren für die Zielzone bzw.

für die Bodenzone für jedes Pixel (2) des Multispektralbildes in der Nutzzone (ZU) zu berechnen; und
bei dem die Module gleichzeitig funktionieren, um jeweils ein Multispektralbild zu bearbeiten, das sich von jenen der anderen Module unterscheidet, wobei die gleichzeitig von den Modulen bearbeiteten Multispektralbilder chronologisch in dem Videostrom in der umgekehrten Reihenfolge zu jener der Module in der Kette aufeinanderfolgen, wobei dann der Videostrom von einem Multispektralbild zu der Kette der Module versetzt wird, so dass der Videostrom nach und nach bei Wiederholungen der gleichzeitigen Funktionen der Module, die durch Versetzungen des Videostroms zur Kette der Module getrennt sind, analysiert wird.

12. Analyseverfahren nach Anspruch 9 und 10, bei dem das Multispektralbild einem Videostrom angehört, umfassend eine Reihe von Multispektralbildern (10-1, 10-2, 10-3, ...), die nacheinander erfasst werden;
bei dem mindestens gewisse der Schritte des Verfahrens innerhalb einer geordneten Kette von Erfassungs- und Berechnungsmodulen ausgeführt werden, die gleichzeitig und synchron aktiviert werden, wobei die Module in dieser Reihenfolge umfassen:

- ein erstes Modul (100), das dazu vorgesehen ist, eine Aufzeichnung oder eine Speicherung jedes Multispektralbildes zu erfassen und zu kontrollieren;
- ein zweites Modul (200), das dazu vorgesehen ist, die Integralbilder erster Ordnung und zweiter Ordnung für jedes Multispektralbild zu berechnen und eine Aufzeichnung oder eine Speicherung jedes Integralbildes erster oder zweiter Ordnung zu kontrollieren;
- ein drittes Modul (300), das dazu vorgesehen ist, für jedes Multispektralbild die zwei Durchschnittsvektoren für die Zielzone bzw. für die Bodenzone für jedes Pixel (2) des Multispektralbildes in der Nutzzone (ZU) zu berechnen; und
- ein viertes Modul (400), das dazu vorgesehen ist, für jedes Multispektralbild und jedes Pixel (2) des Multispektralbildes in der Nutzzone (ZU) mindestens die Kovarianzmatrix und die umgekehrte Kovarianzmatrix zu berechnen,

und bei dem die Module gleichzeitig funktionieren, um jeweils ein Multispektralbild zu bearbeiten, das sich von jenen der anderen Module unterscheidet, wobei die gleichzeitig von den Modulen bearbeiteten Multispektralbilder chronologisch in dem Videostrom in der umgekehrten Reihenfolge zu jener der Module in der Kette aufeinanderfolgen, wobei dann der Videostrom von einem Multispektralbild zu der Kette der Module versetzt wird, so dass der Videostrom nach und nach bei Wiederholungen der gleichzeitigen Funktionen der Module, die durch Versetzungen des Videostroms zur Kette der Module getrennt sind, analysiert wird.

13. Computerprogrammprodukt, umfassend einen von einem oder mehreren Prozessoren lesbaren Träger und Codes, die auf den Träger eingeschrieben und geeignet sind, an einem oder mehreren Prozessoren eine Ausführung eines Analyseverfahrens nach einem der Ansprüche 1 bis 12 zu steuern.

14. Verfahren zur Überwachung einer Umgebung, umfassend die folgenden Schritte:

- gleichzeitiges Erfassen einer Vielzahl von Spektralbildern der Umgebung, um ein Multispektralbild zu erhalten;
- Analysieren des Multispektralbildes unter Verwendung eines Analyseverfahrens nach einem der Ansprüche 1 bis 12; und
- Anzeigen des Erfassungsbildes auf einem Bildschirm für eine Überwachungsperson, die den Bildschirm beobachtet.

15. Überwachungsverfahren nach Anspruch 14, ferner umfassend einen Vergleich des Anzeigewerts jedes Pixels in dem Erfassungsbild mit einer Alarmgrenze, und bei dem ein Pixel ferner in dem Erfassungsbild mit einer veränderten Farbe, einem Blinken oder einem hellen Balken angezeigt ist, wenn der Anzeigewert des Pixels größer als die Alarmgrenze ist.

16. Vorrichtung zur Überwachung einer Umgebung, umfassend:

- Mittel zur Speicherung eines Multispektralbildes (10), das von mehreren Spektralbildern (11, 12, 13, ...) einer selben Szene gebildet ist, die in getrennten Spektralintervallen zusammengefügt sind;
- einen Bildschirm (1001), umfassend Pixel (2), die sich an Schnittstellen von Zeilen bzw. Spalten einer Matrix (1) befinden;
- ein Bildbearbeitungssystem, das geeignet ist, Integralbilder aus den Spektralbildern (11, 12, 13, ...) zu berechnen und die Integralbilder zu speichern;
- Mittel zur Definition eines Fensterrahmens und einer Maske innerhalb des Rahmens, wobei die Maske eine Zielzone und eine Bodenzone innerhalb des Rahmens bestimmt; und
- ein Berechnungssystem, das geeignet ist, den Schritt /3/ eines Analyseverfahrens, das einem der Ansprüche 1 bis 12 entspricht, einzusetzen und ein Erfassungsbild auf dem Bildschirm anzuzeigen, wobei jedes Pixel (2) einer Nutzzone (ZU) der Matrix (1) einen Anzeigewert besitzt, der aus dem Wert der für das Pixel berechneten Aufdeckungsfunktion erhalten wird.

17. Vorrichtung nach Anspruch 16, die dazu vorgesehen ist, ein Analyseverfahren nach dem Anspruch 4 oder 5 auszuführen, und bei der:

- die Mittel zur Speicherung des Multispektralbildes ein erstes Modul (100) umfassen, das dazu vorgesehen ist, eine Aufzeichnung oder eine Speicherung des Multispektralbildes zu erfassen und zu kontrollieren;
- das Bildbearbeitungssystem ein zweites Modul (200) umfasst, das dazu vorgesehen ist, die Integralbilder erster Ordnung für jedes Multispektralbild zu berechnen; und
- das Berechnungssystem ein drittes Modul (300) umfasst, das dazu vorgesehen ist, für jedes Multispektralbild mindestens die zwei Durchschnittsvektoren für die Zielzone bzw. die Bodenzone für jedes Pixel (2) des Multispektralbildes in der Nutzzone (ZU) zu berechnen,

wobei die ersten (100), zweiten (200) und dritten (300) Module in dieser Reihenfolge in einer geordneten Kette von Modulen angeordnet sind, und die Vorrichtung ferner umfasst:

- einen Kontroller (1000), der dazu vorgesehen ist, die gleichzeitigen und synchronen Funktionen der Module zu steuern, um eine Reihe von aufeinanderfolgenden Multispektralbildern (10-1, 10-2, 10-3), die einen Videostrom bilden, zu analysieren, so dass die Module gleichzeitig funktionieren, um jeweils ein Multispektralbild zu bearbeiten, das sich von jenen der anderen Module unterscheidet, wobei die gleichzeitig von den Modulen bearbeiteten Multispektralbilder chronologisch in dem Videostrom in der umgekehrten Reihenfolge zu jener der Module in der Kette aufeinanderfolgen, und wobei der Kontroller ferner dazu vorgesehen ist, eine Versetzung des Videostroms eines Multispektralbildes zu der Kette der Module zu steuern, so dass der gesamte Videostrom nach und nach bei Wiederholungen der gleichzeitigen Funktionen der Module, die durch Versetzungen des Videostroms zur Kette der Module getrennt sind, analysiert wird.

18. Vorrichtung nach Anspruch 16, die dazu vorgesehen ist, ein Analyseverfahren nach den Ansprüchen 9 und 10 auszuführen, und bei der:

- die Mittel zur Speicherung des Multispektralbildes ein erstes Modul (100) umfassen, das dazu vorgesehen ist, eine Aufzeichnung oder eine Speicherung des Multispektralbildes zu erfassen und zu kontrollieren;
- das Bildbearbeitungssystem ein zweites Modul (200) umfasst, das dazu vorgesehen ist, die Integralbilder erster Ordnung und zweiter Ordnung für jedes Multispektralbild zu berechnen; und
- das Berechnungssystem ein drittes Modul (300) umfasst, das dazu vorgesehen ist, für jedes Multispektralbild die zwei Durchschnittsvektoren für die Zielzone bzw. die Bodenzone für jedes Pixel (2) des Multispektralbildes in der Nutzzone (ZU) zu berechnen, und ferner ein viertes Modul (400) umfasst, das dazu vorgesehen ist, für jedes Pixel (2) jedes Multispektralbildes in der Nutzzone (ZU) mindestens die Kovarianzmatrix und die umgekehrte Kovarianzmatrix zu berechnen,

wobei die ersten (100), zweiten (200), dritten (300) und vierten (400) Module in dieser Reihenfolge in einer geordneten Kette von Modulen angeordnet sind, und die Vorrichtung ferner umfasst:

- einen Kontroller (1000), der dazu vorgesehen ist, die gleichzeitigen und synchronen Funktionen der Module zu steuern, um eine Reihe von aufeinanderfolgenden Multispektralbildern (10-1, 10-2, 10-3), die einen Videostrom bilden, zu analysieren, so dass die Module gleichzeitig funktionieren, um jeweils ein Multispektralbild zu bearbeiten, das sich von jenen der anderen Module unterscheidet, wobei die gleichzeitig von den Modulen bearbeiteten Multispektralbilder chronologisch in dem Videostrom in der umgekehrten Reihenfolge zu jener der Module in der Kette aufeinanderfolgen, und wobei der Kontroller ferner dazu vorgesehen ist, eine Versetzung des Videostroms eines Multispektralbildes zu der Kette der Module zu steuern, so dass der gesamte Videostrom nach und nach bei Wiederholungen der gleichzeitigen Funktionen der Module, die durch Versetzungen des Videostroms zur Kette der Module getrennt sind, analysiert wird.

19. Vorrichtung nach Anspruch 17 oder 18, bei der das dritte Modul (300) selbst zwei Untermodule (301, 302) umfasst, die jeweils und getrennt dazu vorgesehen sind, den Durchschnittsvektor für die Zielzone und den Durchschnittsvektor für die Bodenzone gemäß den gleichzeitigen Funktionen der Untermodule für jedes Multispektralbild und jedes Pixel (2) des Multispektralbildes in der Nutzzone (ZU) zu berechnen.

20. Vorrichtung nach einem der Ansprüche 17 bis 19, bei der jedes Modul oder Untermodul mindestens eine spezielle Berechnungseinheit umfasst.

## Claims

1. Method for analyzing a multispectral image (10), said multispectral image comprising a plurality of spectral images (11, 12, 13, ...) of one and same scene but corresponding to different spectral ranges,

each spectral image assigning an intensity value to each pixel (2) located at an intersection of a row and a column of a matrix (1) of the multispectral image, and an origin point (O) being defined at a corner of the peripheral boundary of the matrix;

wherein a detection image is constructed by assigning a display value to each pixel of a working area (ZU) of the matrix, said display value being obtained from a revealing function that quantifies a content difference in the multispectral image between two areas that are determined by said pixel;

the method comprising the steps of:

/1/ calculating integral images of at least one of the following types:

- for each spectral image, a first-order integral image, by assigning to each calculation pixel an integral value equal to a sum of the intensity values of said spectral image for all pixels contained within a rectangle having two opposite vertices respectively located on the origin point and on said calculation pixel;
- for each pair of spectral images originating from the multispectral image, a second-order integral image, by assigning to each calculation pixel another integral value equal to a sum, for all pixels contained within the rectangle having two opposite vertices respectively located on the origin point and on said calculation pixel, of products of the two intensity values relative to the same pixel but respectively assigned by each spectral image of the pair;

/2/ defining a fixed window frame and a mask fixed and internal to the frame, said mask defining a target area and a background area within said frame; and

/3/ for each pixel (2) of the working area (ZU) of the matrix (1), performing the following sub-steps:

/3-1/ placing a window at a position in the matrix that is determined by the pixel, said window being delimited by the frame defined in step /2/;

/3-2/ by using the integral values read from the integral images calculated in step /1/, determining a value of the revealing function that quantifies the content difference in the multispectral image between the target area and the background area within the window, in the window position determined by said pixel; and

/3-3/ assigning the value of the revealing function, calculated in sub-step /3-2/, to the pixel for which step /3/ is performed,

wherein the display value is obtained from the value of the revealing function for each pixel in the detection image, using one or a combination of the following methods:

- comparing the value of the revealing function to a threshold, and the display value is set to zero if said value of the revealing function is below the threshold, otherwise said display value is set to said value of the revealing function; or
- applying a linear scale conversion to the value of the revealing function, and the display value is set to the result of the conversion.

2. Analysis method according to claim 1, wherein the window frame has dimensions between one-fifth to one-fiftieth of the dimensions of the matrix parallel to the rows and columns.

3. Analysis method according to claim 1 or 2, wherein the mask is defined in step /2/ so that the target area and the background area are separated by an intermediate area within the window frame.

4. Analysis method according to any one of the preceding claims, wherein step /1/ includes calculating the first-order integral images, and sub-step /3-2/ includes:

/3-2-1/ by using integral values read from the first-order integral images, determining two mean vectors for the target area and for the background area respectively, each having a coordinate for each spectral image, which is equal to an average of the intensity values of said spectral image, calculated for the pixels of the target area or of the background area respectively; then

/3-2-2/ calculating the value of the revealing function from said two mean vectors.

5. Analysis method according to claim 4, wherein the revealing function is an angle between the two mean vectors in a multidimensional space which has the intensities for each spectral image as axes, or is dependent on said angle.

6. Method according to any one of the preceding claims, wherein step /1/ includes calculating the first-order as well as the second-order integral images, and in sub-step /3-2-2/, the value of the revealing function is calculated using integral values read from the second-order integral images, in addition to integral values read from the first-order integral images.

7. Analysis method according to any one of the preceding claims, wherein sub-step /3-2/ includes a determination of a Fisher factor, in the form of a vector associated with a Fisher projection that increases a contrast of the multispectral image within the window between the target area and the background area.

8. Analysis method according to claims 6 and 7, wherein the Fisher factor is itself calculated in sub-step /3-2/ for each pixel of the working area from the integral values read from the first- and second-order integral images.

9. Analysis method according to claims 4 and 8, wherein the Fisher factor is calculated in step /3-2/ for each pixel of the working area, in the form of a product between a row vector resulting from a difference between the mean vectors calculated for the target area and for the background area, and an inverse covariance matrix, said covariance matrix having a factor for each pair of spectral images originating from the multispectral image, which is equal to a covariance of the spectral intensity values respectively assigned by each spectral image of the pair, calculated for the pixels of the background area.

10. Method according to claim 4 and any one of claims 7 to 9, wherein sub-step /3-2/ comprises a calculation of two mean Fisher values for the target area and for the background area respectively, each equal to a dot product result of the Fisher factor and of the mean vector for the target area or for the background area respectively;
and the value of the revealing function is dependent on a difference between said two mean Fisher values.

11. Analysis method according to claim 4 or 5, wherein the multispectral image is part of a video stream comprising a series of successively captured multispectral images (10-1, 10-2, 10-3, ...);
wherein at least some of the steps of the method are executed within an ordered chain of acquisition and calculation modules that are activated simultaneously and synchronously, said modules comprising, in order:

- a first module (100) adapted for capturing and controlling a recording or storing of each multispectral image;
- a second module (200) adapted for calculating the first-order integral images, and for controlling a recording or storing of each first-order integral image; and
- a third module (300) adapted for calculating, for each multispectral image, at least the two mean vectors for the target area and for the background area respectively, for each pixel (2) of said multispectral image within the working area ( ZU); and

and wherein the modules operate simultaneously such that each one processes a multispectral image different from those of the other modules, said multispectral images processed simultaneously by the modules being chronologically successive in the video stream in the reverse order to that of the modules in the chain, the video stream then being shifted by one multispectral image relative to the chain of modules, so that the entire video stream is progressively analyzed during repeated simultaneous executions of the modules, separated by shifts of the video stream relative to the chain of modules.

12. Analysis method according to claims 9 and 10, wherein the multispectral image is part of a video stream comprising a series of successively captured multispectral images (10-1, 10-2, 10-3, ...);
wherein at least some of the steps of the method are executed within an ordered chain of acquisition and calculation modules that are activated simultaneously and synchronously, said modules comprising, in order:

- a first module (100) adapted for capturing and controlling a recording or storing of each multispectral image;
- a second module (200) adapted for calculating the first-order and second-order integral images for each multispectral image, and for controlling a recording or storing of each first- or second-order integral image;
- a third module (300) adapted for calculating, for each multispectral image, the two mean vectors for the target area and for the background area respectively, for each pixel (2) of said multispectral image within the working area (ZU); and
- a fourth module (400) adapted for calculating, for each multispectral image and for each pixel (2) of said multispectral image within the working area (ZU), at least the covariance matrix and the inverse covariance matrix,

and wherein the modules operate simultaneously such that each one processes a multispectral image different from those of the other modules, said multispectral images processed simultaneously by the modules being chronologically successive in the video stream in the reverse order to that of the modules in the chain; then the video stream is shifted by one multispectral image relative to the chain of modules, so that the entire video stream is progressively analyzed during repeated simultaneous operations of the modules, separated by shifts of the video stream relative to the chain of modules.

13. Computer program product, comprising a medium readable by one or more processors, and codes written on said medium and able to cause said one or more processors to execute an analysis method according to any one of claims 1 to 12.

14. Method for monitoring an environment, comprising the steps of:

- simultaneously capturing a plurality of spectral images of the environment, in order to obtain a multispectral image;

- analyzing the multispectral image using an analysis method according to any one of claims 1 to 12; and
- displaying the detection image on a screen, for a monitoring operator who is viewing at the screen.

15. Monitoring method according to claim 14, further comprising a comparison of the display value of each pixel in the detection image with an alert threshold, and wherein a pixel is also displayed in the detection image with a modified color, with flashing, or with an overlay, if the display value of said pixel exceeds the alert threshold.

16. Device for monitoring an environment, comprising:

- means for storing a multispectral image (10) formed of a plurality of spectral images (11, 12, 13, ...) of one and same scene but which are associated with separate spectral ranges;
- a screen (1001) comprising pixels (2) respectively located at intersections of rows and columns of a matrix (1);
- an image processing system adapted for calculating integral images from the spectral images (11, 12, 13, ...), and for storing said integral images;
- means for defining a window frame and a mask internal to the frame, said mask defining a target area and a background area within said frame; and
- a calculation system adapted to implement step /3/ of an analysis method according to anyone of claims 1 to 12, and to display a detection image on the screen, wherein each pixel (2) of a working area (ZU) of the matrix (1) has a display value which is obtained from the value of the revealing function calculated for said pixel.

17. Device according to claim 16, adapted for executing an analysis method according to claim 4 or 5, and wherein:

- the storage means for the multispectral image comprise a first module (100) adapted for capturing and controlling a recording or storage of the multispectral image;
- the image processing system comprises a second module (200) adapted for calculating the first-order integral images for each multispectral image; and
- the calculation system comprises a third module (300) adapted for calculating, for each multispectral image, at least the two mean vectors for the target area and for the background area respectively, for each pixel (2) of said multispectral image within the working area (ZU),

the first (100), second (200), and third (300) modules being arranged in order in an ordered chain of modules, and the device further comprising:

- a controller (1000) adapted for controlling simultaneous and synchronous operations of the modules in order to analyze a series of successive multispectral images (10-1, 10-2, 10-3, ...) that form a video stream, said modules operating simultaneously such that each one processes a multispectral image that is different from those of the other modules, said multispectral images processed simultaneously by the modules being chronologically successive in the video stream in the reverse order to that of the modules in the chain, and said controller being further adapted for controlling a shift of the video stream by one multispectral image relative to the chain of modules, so that the entire video stream is progressively analyzed during repeated simultaneous operations of the modules, separated by shifts of the video stream relative to the chain of modules.

18. Device according to claim 16, adapted for executing an analysis method according to claims 9 and 10, and wherein:

- the storage means for the multispectral image comprise a first module (100) adapted for capturing and controlling a recording or storage of the multispectral image;
- the image processing system comprises a second module (200) adapted for calculating the first-order and second-order integral images for each multispectral image; and
- the calculation system comprises a third module (300) adapted for calculating, for each multispectral image, the two mean vectors for the target area and for the background area respectively, for each pixel (2) of said multispectral image within the working area (ZU), and further comprises a fourth module (400) adapted for calculating, for each pixel (2) of each multispectral image in the working area (ZU), at least the covariance matrix and the inverse covariance matrix,

the first (100), second (200), third (300), and fourth (400) modules being arranged in order in an ordered chain of modules, and the device further comprising:

- a controller (1000) adapted for controlling simultaneous and synchronous operations of the modules in order to analyze a series of successive multispectral images (10-1, 10-2, 10-3, ...) that form a video stream, said modules operating simultaneously such that each one processes a multispectral image that is different from those of the other modules, said multispectral images processed simultaneously by the modules being chronologically successive in the video stream in the reverse order to that of the modules in the chain, and said controller being further adapted for controlling a shift of the video stream by one multispectral image relative to the chain of modules, so that the entire video stream is progressively analyzed during repeated simultaneous operations of the modules, separated by shifts of the video stream relative to the chain of modules.

**19.** Device according to claim 17 or 18, wherein the third module (300) itself comprises two sub-modules (301, 302) that are respectively and separately dedicated to calculating the mean vector for the target area and the mean vector for the background area, with simultaneous operations of said sub-modules for each multispectral image and each pixel (2) of said multispectral image within the working area (ZU).

**20.** Device according to any one of claims 17 to 19, wherein each module or submodule comprises at least one dedicated calculation unit.

FIG. 1

FIG. 2

FIG. 3a

FIG. 3b

$n_{xB}$

$n_{xJ}$

$n_{xT}$

B

$n_{yT}$ $n_{yJ}$ $n_{yB}$

F1    T    J

## FIG. 4

CADRE DE FENETRE
AVEC MASQUE

IMAGE MULTISPECTRALE 10

CALCUL DES IMAGES INTEGRALES D'ORDRE UN ET/OU DEUX — S1

POUR CHAQUE PIXEL DE LA ZONE UTILE ZU

CALCUL: DU VECTEUR MOYEN DE LA ZONE DE CIBLE: $\vec{m_T}$
DU VECTEUR MOYEN DE LA ZONE DE FOND: $\vec{m_B}$

DE LA MATRICE DE COVARIANCE: $Covar_B$
DU FACTEUR DE FISHER: $P_{Fisher}$ — S2

CALCUL: DE LA VALEUR MOYENNE DE FISHER POUR LA ZONE DE CIBLE: $mF_T$
DE LA VALEUR MOYENNE DE FISHER POUR LA ZONE DE FOND: $mF_B$ — S3

CALCUL DE LA FONCTION REVELATRICE — S4

SEUILLAGE / CONVERSION D'ECHELLE — S5

AFFICHAGE DE L'IMAGE DE DETECTION — S6

## FIG. 5

11I
12I
13I
$\cdot$
$\cdot$
$\cdot$
$\cdot$

$\left.\right\}$ S1

$\vec{m_T}, \vec{m_B}$

$\left.\right\}$ S2

$$REV = Arccos\left(\frac{\vec{m_T} \cdot \vec{m_B}}{\|\vec{m_T}\| \cdot \|\vec{m_B}\|}\right)$$

$\left.\right\}$ S4

POUR CHAQUE PIXEL DE LA ZONE UTILE ZU

## FIG. 6a

11I    (11x11)I
12I    (11x12)I    (12x12)I
13I    (11x13)I    (12x13)I    (13x13)I    }S1

$\vec{m_T}, \vec{m_B}$        $\text{Covar}_B$

$P_{Fisher}$

} S2

$mF_T = P_{Fisher} \cdot \vec{m_T}$
$mF_B = P_{Fisher} \cdot \vec{m_B}$

} S3

$REV(mF_T - mF_B)$

} S4

POUR CHAQUE PIXEL DE LA ZONE UTILE ZU

## FIG. 6b

FIG. 7

FIG. 8

t

10-5 10-4 10-3 10-2 10-1

13
12
11

13
12
11

13
12
11

13
12
11

13
12
11

| 100 | 200 | 300 | 400 |

ACQUISITION ET SAISIE DES IMAGES MULTISPECTRALES

CALCUL DES IMAGES INTEGRALES D'ORDRE UN ET DEUX

CALCUL DE $\vec{m}_T$

301

CALCUL DE $\vec{m}_B$

302

CALCUL DE
Co var$_{B^{-1}}$
Co var$_B$
P$_{Fisher}$
mF$_T$
mF$_B$
REV

CTRL

1000 1001

FIG. 9a

EP 3 074 920 B1

31

t

10-5  10-4  10-3  10-2  10-1

...

13  13  13  13  13

11 12  11 12  11 12  11 12  11 12

100  200  300

| ACQUISITION ET SAISIE DES IMAGES MULTISPECTRALES | CALCUL DES IMAGES INTEGRALES D'ORDRE UN | CALCUL DE $\vec{m}_T$ $\vec{m}_B$ REV |

CTRL

1000  1001

FIG. 9b

EP 3 074 920 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2982393

**Littérature non-brevet citée dans la description**

- **DE F. GOUDAIL et al.** Some practical issues in anomaly detection and exploitation of regions of interest in hyperspectral images. *Applied Optics,* vol. 45 (21), 5223-5236